# EUROPEAN PATENT APPLICATION

(11) **EP 4 787 139 A1**
(43) Date of publication of application: **05.08.2026**
(21) Application number: 26154602.2
(22) Date of filing: 28.01.2026
(51) Int. Cl.: G06F 3/12

(54) **SERVICE PROVIDING DEVICE, SERVICE PROVIDING METHOD, AND SERVICE PROVIDING PROGRAM**

(30) Priority: 31.01.2025 JP 2025015174; 12.12.2025 JP 2025248043
(71) Applicant: FUJIFILM Corporation, Tokyo 106-8620 (JP)
(72) Inventor: TAMAKOSHI, Fumie, Saitama (JP); OSHIMA, Kazuki, Saitama (JP); OSHIMA, Hiroyuki, Saitama (JP)
(74) Representative: Parker, Andrew James

(57) **Abstract**

Provided are a service providing device, a service providing method, and a service providing program that can achieve both improvement in service quality and enhancement in operational efficiency.

A service providing device is a service providing device that provides services including a service for printing an image on a recording medium, the service providing device including: a plurality of printers each having an independent accommodating mechanism for the recording medium; and a processor that selects at least one printer such that a condition having relatively high priority among a plurality of predetermined conditions for selecting the printers is satisfied.

## Description

### Technical Field

The present disclosure relates to a service providing device, a service providing method, and a service providing program.

### Background Art

JP2003-182188A discloses an image printing device comprising a plurality of printers. In addition, in a case of printing a plurality of images, the plurality of images are distributed and printed by the plurality of printers, and in a case of printing a plurality of the same images, the plurality of the same images are sequentially printed by a specific printer set in advance.

JP1999-084522A (JP-H11-084522A) discloses an automatic photo capturing device in which a printer is provided away from a housing, and an image of electronic information including a video obtained by a camera is transmitted from a control device in the housing to the printer. In addition, it is described that two or more printers are provided, and in a case of replenishing a print material to a first printer, switching to a second printer is performed. In addition, it is described that the plurality of printers are operated at the same time, and a plurality of prints are quickly created.

JP2022-047863A discloses that, in a case of guiding printed matter output from a printer to any one of a plurality of delivery ports, the printed matter is guided to the delivery port corresponding to a space in which a user performs work.

### SUMMARY OF INVENTION

One embodiment according to the technology of the present disclosure provides a service providing device, a service providing method, and a service providing program that can achieve both improvement in service quality and enhancement in operational efficiency.

A first aspect of the present disclosure relates to a service providing device that provides services including a service for printing an image on a recording medium, the service providing device comprising: a plurality of printers each having an independent accommodating mechanism for the recording medium; and a processor that selects at least one printer such that a condition having relatively high priority among a plurality of predetermined conditions for selecting the printers is satisfied.

The priority may be changeable.

The processor may receive a change in the priority.

The plurality of printers may be configured to print the image on different types of the recording media, and the processor may acquire designation information on designation of the type of the recording medium, and select the printer based on the designation information.

The processor may select the printer based on information on a replenishment timing of a replenishment member for the printer.

The processor may select two or more printers in a case of performing the printing on a plurality of the recording media, and perform control such that the printing is performed by the two or more printers.

The plurality of recording media may be of the same type.

In a case of performing the printing on the plurality of recording media, the processor may perform control such that a first print mode, and a second print mode in which the number of the printers to be selected is smaller than the number of the printers to be selected in the first print mode are switchable.

In a case of performing the printing on the plurality of recording media, the processor may perform control such that a first print mode in which control is performed such that the printing is performed in parallel by a larger number of the printers, and a second print mode in which control is performed such that the printing is performed by a smaller number of the printers are switchable.

The processor may receive designation of the first print mode or the second print mode.

The processor may switch between the first print mode and the second print mode based on a time taken for the printing.

The processor may set the first print mode in a case in which a preparation period from when the printer is instructed to print the image to when the printer starts the printing is shorter than a printing period from when the printer starts the printing to when the printing is completed, and set the second print mode in a case in which the preparation period is longer than the printing period.

The processor may perform control of prompting taking-out of the recording medium after the printing from a discharge port for the recording medium in a case of performing the printing on a plurality of the recording media.

The processor may acquire height information on a height of a user, and select the printer based on the height information.

The processor may select the printer based on a distribution of the number of the recording media in each of the printers.

The processor may detect a change in the number of the recording media in each of the printers, and perform control of prompting use of the recording medium for which the change is relatively small.

The processor may detect a distribution of the number of the recording media in each of the printers, and perform control of prompting use of the recording medium of which the number is relatively large in a case in which there is the recording medium of which the number is smaller than a predetermined threshold value.

The plurality of printers may each be assigned identification information, and the processor may read the identification information of a target printer that is the printer as a target for work, and determine whether or not the work is appropriate based on a state of the target printer.

The state of the target printer may include a state related to the number of the recording media accommodated in the target printer.

The service providing device may further comprise: a first housing including a first printer; and a second housing including a second printer and the processor, in which the first housing and the second housing are connectable and capable of providing the services in both a connected state and a separated state in which the first housing and the second housing are disconnected, and the processor selects at least one of the first printer or the second printer.

At least one of a condition in which the first housing includes a plurality of the first printers or a condition in which the second housing includes a plurality of the second printers may be satisfied, and the processor may select either or both of one or the plurality of first printers and one or the plurality of second printers.

The processor may change the priority depending on whether the service providing device is in the connected state or the separated state.

The processor may manage the plurality of printers by dividing the plurality of printers into groups, and select the printers included in a selected group by selecting one of the groups based on information on a distribution of the number of the recording media for each group.

A second aspect of the present disclosure relates to a service providing method executed by a computer for providing services including a service for printing an image on a recording medium, the service providing method comprising: selecting at least one printer of a plurality of printers each having an independent accommodating mechanism for the recording medium such that a condition having relatively high priority among a plurality of predetermined conditions for selecting the printers is satisfied.

A third aspect of the present disclosure relates to a service providing program for providing services including a service for printing an image on a recording medium, the service providing program causing a computer to execute a process comprising: selecting at least one printer of a plurality of printers each having an independent accommodating mechanism for the recording medium such that a condition having relatively high priority among a plurality of predetermined conditions for selecting the printers is satisfied.

### BRIEF DESCRIPTION OF DRAWINGS

FIG. 1 is a diagram illustrating an example of a usage aspect of a service providing device.
FIG. 2 is a schematic configuration diagram of the service providing device.
FIG. 3 is a schematic configuration diagram of the service providing device.
FIG. 4 is a diagram illustrating an example of a usage aspect of the service providing device in a separated state.
FIG. 5 is a block diagram illustrating an example of a hardware configuration of the service providing device.
FIG. 6 is a block diagram illustrating an example of a functional configuration of the service providing device.
FIG. 7 is a diagram illustrating an example of a combination service.
FIG. 8 is a diagram illustrating an example of a type of a recording medium.
FIG. 9 is a schematic configuration diagram of a server device.
FIG. 10 is a diagram illustrating an example of an output service.
FIG. 11 is a diagram illustrating an example of the output service.
FIG. 12 is a diagram illustrating a method of estimating height information.
FIG. 13 is a diagram illustrating the method of estimating the height information.
FIG. 14 is a diagram illustrating a method of selecting a printer in accordance with the height information.
FIG. 15 is a flowchart illustrating an example of a service providing process according to a first embodiment.
FIG. 16 is a diagram illustrating an example of printer selection conditions.
FIG. 17 is a diagram illustrating an example of a screen displayed on a touch panel.
FIG. 18 is a diagram illustrating an example of the screen displayed on the touch panel.
FIG. 19 is a flowchart illustrating an example of a service providing process according to a second embodiment.
FIG. 20 is a block diagram illustrating an example of a functional configuration of the service providing device.
FIG. 21 is a diagram illustrating an example of history information.
FIG. 22 is a diagram illustrating an example of a prediction model.
FIG. 23 is a diagram illustrating an example of the screen displayed on the touch panel.
FIG. 24 is a flowchart illustrating an example of a service providing process according to a third embodiment.

### DESCRIPTION OF EMBODIMENTS

Hereinafter, examples of embodiments of the technology of the present disclosure will be described with reference to the drawings. The same or equivalent components and parts in the respective drawings are designated by the same reference numerals, and duplicated description will be omitted. The dimensional ratios in the drawings are exaggerated for convenience of description, and may be different from the actual ratios.

### First Embodiment

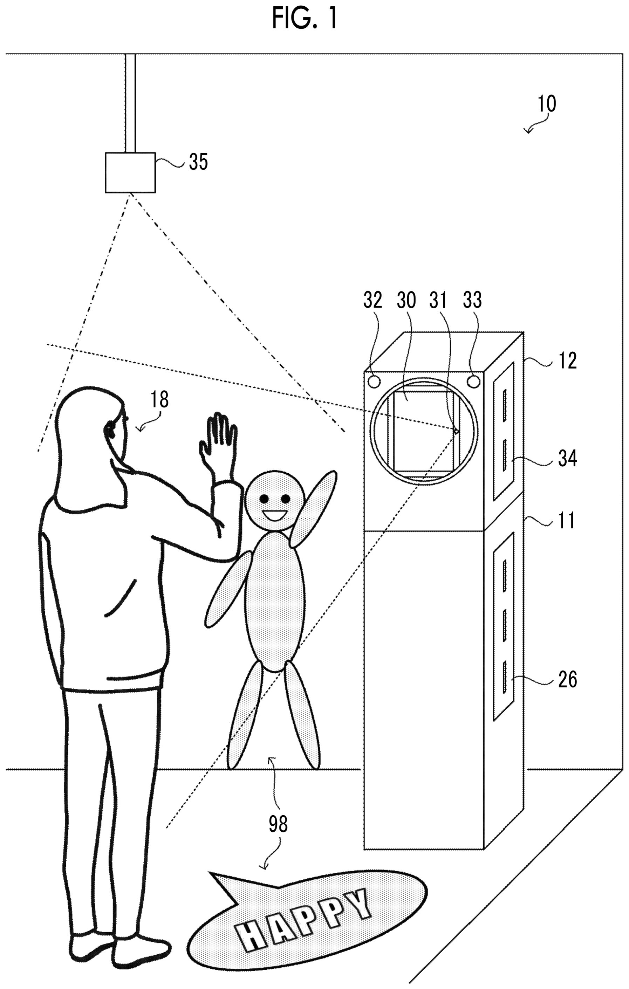

An example of a configuration of a service providing device (hereinafter, device 10) according to the present embodiment will be described with reference to FIGS. 1 to 3. The device 10 is, for example, a digital photo booth installed at a store, a tourist facility, a game center, or the like, and provides various services including a service for printing an image on a recording medium.

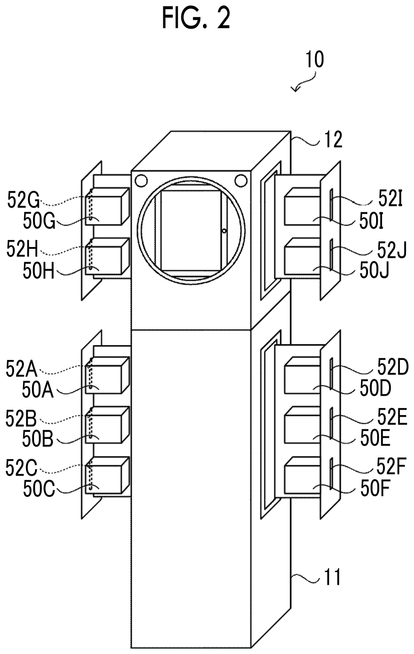

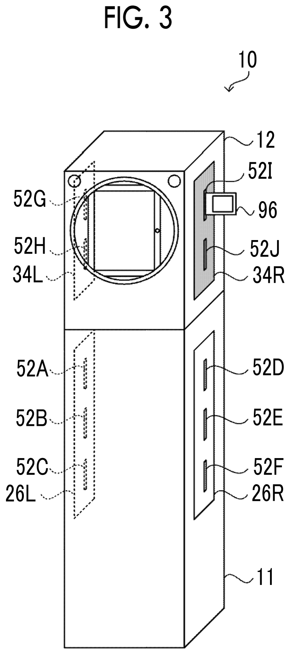

FIG. 1 is a diagram illustrating an example of a usage aspect of the device 10. FIG. 2 is a diagram illustrating a state in which an accommodating mechanism of a printer built in the device 10 is deployed. FIG. 3 is a diagram illustrating a state in which the recording medium after the printing is discharged from the device 10.

The device 10 comprises a first housing 11 and a second housing 12. The first housing 11 and the second housing 12 each comprise at least one printer. The first housing 11 may comprise a plurality of printers, and the second housing 12 may comprise a plurality of printers. As an example, in the device 10 illustrated in FIG. 2, the first housing 11 comprises six printers 50A to 50F, and the second housing 12 comprises four printers 50G to 50J. The printers 50A to 50F are examples of a "first printer" according to the present disclosure. The printers 50G to 50J are examples of a "second printer" according to the present disclosure. Hereinafter, the printers 50A to 50J will be simply referred to as a printer 50 in a case in which the printers 50A to 50J are not distinguished from each other.

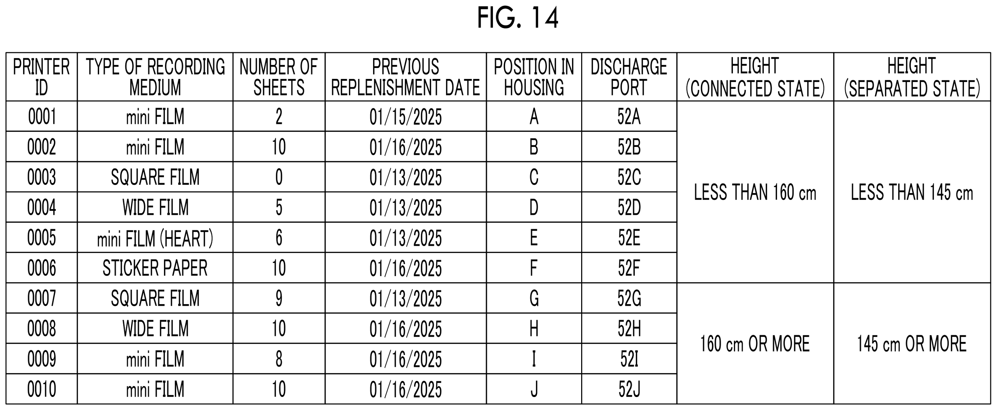

The respective printers 50 comprise recording medium accommodating mechanisms that are independent of each other, and are capable of printing the image on different types of the recording media. The different types of the recording media include, for example, recording media having different characteristics, such as an instant film, ink jet paper, and seal paper, recording media having the same characteristics but different sizes, and recording media having the same characteristics and sizes but different designs (a base color, a pattern, and the like). As described above, the device 10 comprises a plurality of printers 50 that can perform the printing on one type of the recording medium, and thus is configured to support various recording media (see FIG. 14).

The device 10 comprises a discharge port that discharges the recording medium after the printing. As an example, the device 10 illustrated in FIG. 3 comprises discharge ports 52A to 52J corresponding to the respective printers 50A to 50J. In the example of FIG. 3, a recording medium 96 on which the image is printed by the printer 50I is discharged from the discharge port 52I. Hereinafter, the discharge ports 52A to 52J will be simply referred to as a discharge port 52 in a case in which the discharge ports 52A to 52J are not distinguished from each other.

The printer 50 is configured to be accommodated inside the housing and to be deployed outside the housing. For example, as illustrated in FIGS. 1 and 3, the printer 50 is accommodated inside the housing during providing the service. On the other hand, for example, as illustrated in FIG. 2, the printer 50 is deployed outside the housing during maintenance, replenishment of the recording medium, and the like. Here, the deployment does not need to be performed simultaneously in all the printers 50, and can be performed for each printer 50.

The first housing 11 and the second housing 12 are connectable and capable of providing the services in both a connected state and a separated state in which the first housing 11 and the second housing 12 are disconnected. The phrase "connected" refers to a connection with physical contact, and includes a mechanical connection or a magnetic connection. The mechanical connection includes, for example, a connection by fitting of a protrusion and a recess, a connection by a screw, and the like.

In the examples of FIGS. 1 to 3, in the connected state, the second housing 12 is disposed above the first housing 11. The phrase "disposed above" does not necessarily mean a state in which each housing is completely divided into an upper part and a lower part. For example, a portion of the second housing 12 may protrude into a region of the first housing 11 by fitting of the protrusion and the recess of each of the first housing 11 and the second housing 12. In addition, for example, in a case in which a skirt is provided at both ends of the second housing 12, a portion of the first housing 11 and a portion of the second housing 12 may overlap each other, such as the skirt covering an outer surface of the first housing 11.

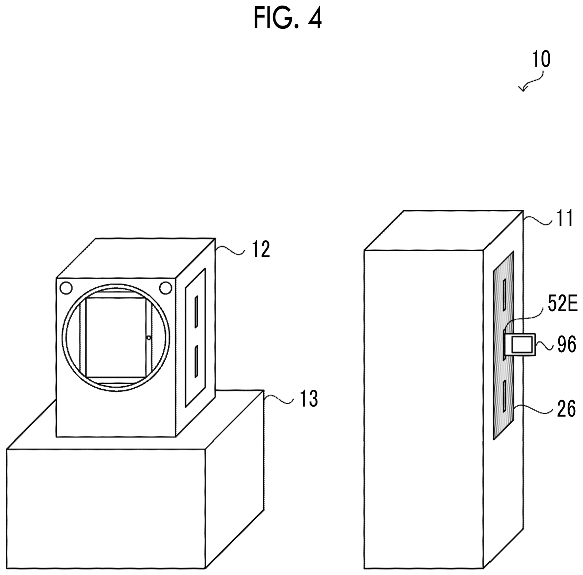

FIG. 4 is a diagram illustrating an example of a usage aspect of the device 10 in the separated state. In the example of FIG. 4, the second housing 12 is placed on a stand 13. In addition, the recording medium 96 after the printing by the printer 50D of the first housing 11 separated from the second housing 12 is discharged from the discharge port 52D. Even in this case, the operation input to the device 10 is performed by the touch panel 30 of the second housing 12.

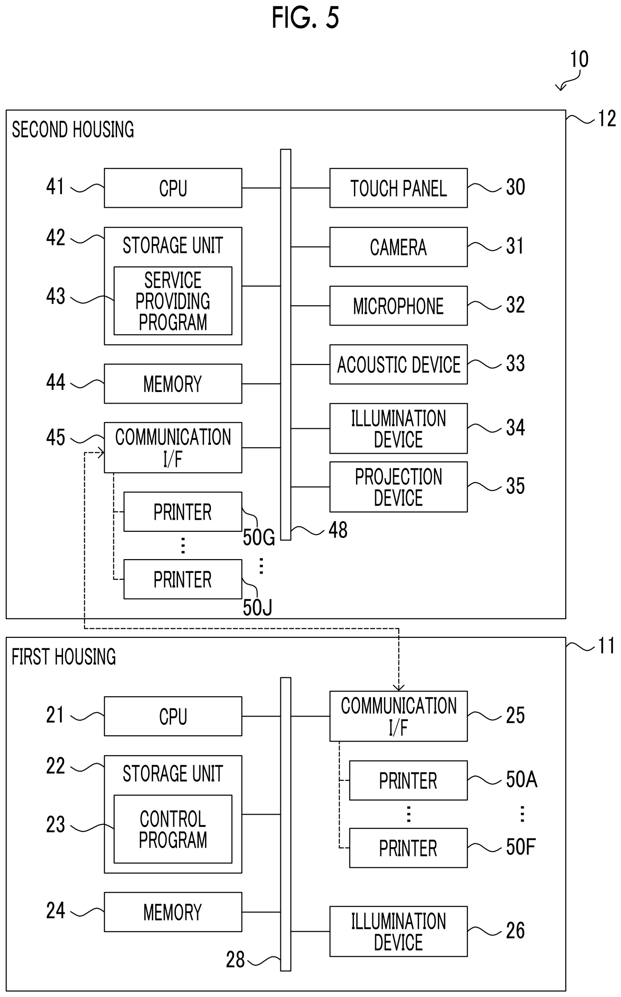

Next, an example of a hardware configuration of the device 10 will be described with reference to FIG. 5. As described above, the device 10 comprises the first housing 11 and the second housing 12.

The first housing 11 comprises a central processing unit (CPU) 21, a non-volatile storage unit 22, a memory 24 as a temporary storage region, and a communication interface (I/F) 25. Further, the first housing 11 comprises an illumination device 26 and a plurality of printers 50A to 50F. The CPU 21, the storage unit 22, the memory 24, the communication I/F 25, and the illumination device 26 are connected to each other via a bus 28 such as a system bus or a control bus, and can exchange information with each other.

The storage unit 22 is implemented using, for example, a storage medium, such as a hard disk drive (HDD), a solid-state drive (SSD), and a flash memory. The storage unit 22 stores a control program 23. The CPU 21 reads out the control program 23 from the storage unit 22, loads the read-out control program 23 into the memory 24, and executes the loaded control program 23.

The communication I/F 25 is an interface for communicating with the second housing 12, the printers 50A to 50F, and other devices. For this communication, for example, a wired communication standard such as Ethernet (registered trademark) or fiber distributed data interface (FDDI), or a wireless communication standard such as 4G, 5G, or Wi-Fi (registered trademark) is used.

The illumination device 26 includes, for example, a light emitting diode (LED) light source comprising an RGB light emitting element, and a color and an amount of light can be adjusted. In addition, as illustrated in FIG. 3, the first housing 11 may comprise a plurality of illumination devices 26 associated with the respective discharge ports 52. In the example of FIG. 3, the first housing 11 comprises an illumination device 26L corresponding to the discharge ports 52A to 52C and an illumination device 26R corresponding to the discharge ports 52D to 52F.

The second housing 12 comprises a CPU 41, a non-volatile storage unit 42, a memory 44 as a temporary storage region, and a communication I/F 45. In addition, the second housing 12 comprises the touch panel 30, a camera 31, a microphone 32, an acoustic device 33, an illumination device 34, a projection device 35, and the plurality of printers 50G to 50J. The CPU 41, the storage unit 42, the memory 44, the communication I/F 45, the touch panel 30, the camera 31, the microphone 32, the acoustic device 33, the illumination device 34, and the projection device 35 are connected to each other via a bus 48 such as a system bus or a control bus, and can exchange information with each other.

The storage unit 42 is implemented using, for example, a storage medium such as an HDD, an SSD, or a flash memory. The storage unit 42 stores a service providing program 43. The CPU 41 reads out the service providing program 43 from the storage unit 42, loads the read-out service providing program 43 into the memory 44, and executes the loaded service providing program 43. The CPU 41 is an example of a processor according to the present disclosure.

The communication I/F 45 is an interface for communicating with the first housing 11, the printers 50G to 50J, a server device 60, and other devices. For this communication, for example, a wired communication standard such as Ethernet or FDDI, or a wireless communication standard such as 4G, 5G, or Wi-Fi is used.

The touch panel 30 has the functions of an input device and an output device. That is, the input of various types of information to the device 10 and the output (display) of various types of information from the device 10 are performed through the touch panel 30. The input device may be configured by independent hardware (for example, a button-type input device) other than the touch panel 30. The touch panel 30 may be capable of adjusting an elevation/depression angle thereof. The touch panel 30 is an example of a "display" according to the present disclosure.

The camera 31 optically images a user 18, a user candidate, a space in which the device 10 is installed, and the like. The camera 31 includes an imaging optical system that forms an image of light, and an image sensor that outputs a formed optical image as an electrical image signal. As the image sensor, for example, a complementary metal oxide semiconductor (CMOS) image sensor or a charge-coupled device (CCD) image sensor is used. The camera 31 may be capable of adjusting an elevation/depression angle thereof, and may further be capable of adjusting an angle of view thereof. The camera 31 is an example of an "imaging device" according to the present disclosure.

The microphone 32 detects the voice of the user 18. The acoustic device 33 is a device that provides the user 18 with an auditory stimulus such as voice and music, and includes, for example, a speaker.

The illumination device 34 includes, for example, an LED light source comprising an RGB light emitting element, and a color and an amount of light can be adjusted. In addition, as illustrated in FIG. 3, the second housing 12 may comprise a plurality of illumination devices 34 associated with the respective discharge ports 52. In the example of FIG. 3, the second housing 12 comprises an illumination device 34L corresponding to the discharge ports 52G and 52H and an illumination device 34R corresponding to the discharge ports 52I and 52J.

As illustrated in FIG. 1, the projection device 35 projects a projection image 98 to at least one of a wall, a floor, or a ceiling around the device 10. Further, the projection device 35 may project the projection image 98 to a body of the user 18. The projection device 35 includes a display unit that displays the projection image 98, and a projection optical system that projects projection light representing the projection image 98 displayed on the display unit. As the display unit, for example, a transmissive type display unit configured by a combination of a liquid crystal display (LCD) and a light source, a reflective type display unit configured by a combination of digital light processing (DLP) and a light source, or the like is used.

A position at which the projection device 35 is installed is not particularly limited, and can be, for example, a ceiling and a wall of a space in which the device 10 is disposed, as illustrated in FIG. 1. In this case, the control of the projection device 35 by the CPU 41 may be performed via wireless communication. In addition, for example, the projection device 35 may be provided on a main body of the device 10, such as an upper surface of the second housing 12.

As the device 10, for example, a server computer, a personal computer, a smartphone, a tablet terminal, a wearable terminal, and the like can be applied as appropriate. For example, the CPU 41, the storage unit 42, the memory 44, the communication I/F 45, the touch panel 30, the camera 31, the microphone 32, and the acoustic device 33 in the second housing 12 may be mounted as a tablet terminal.

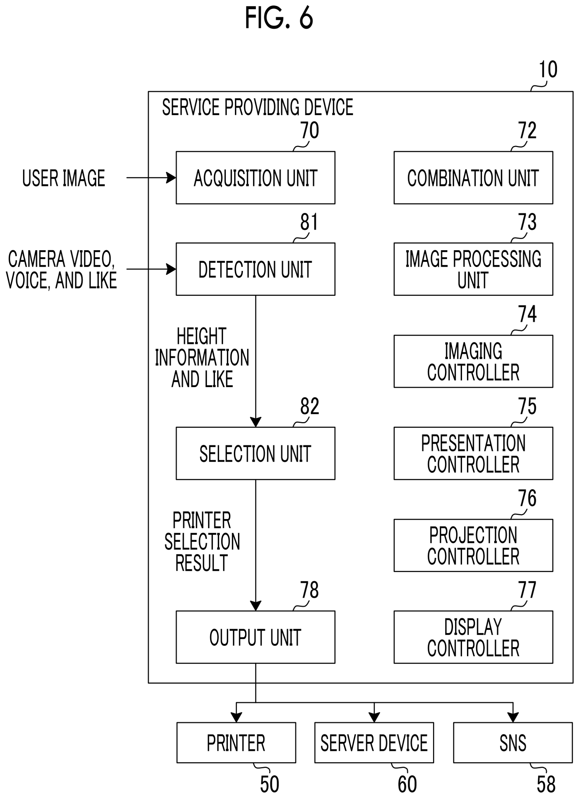

Next, an example of a functional configuration of the device 10 will be described with reference to FIG. 6. The device 10 includes an acquisition unit 70, a combination unit 72, an image processing unit 73, an imaging controller 74, a presentation controller 75, a projection controller 76, a display controller 77, an output unit 78, a detection unit 81, and a selection unit 82 as a functional configuration. These functional units function in a case in which the CPU 41 executes the service providing program 43.

The acquisition unit 70 acquires an image 90 of the user 18. The "image of the user" is an image in which the user 18 is a subject or any image input by the user 18 via an external device.

### Imaging Service

The device 10 may provide an imaging service for capturing the image 90 on site using the camera 31. Specifically, the acquisition unit 70 acquires a captured image (image in which the user 18 is a subject) of the user 18 captured by the camera 31. In addition, the acquisition unit 70 may image the user 18 a plurality of times by the camera 31.

In addition, the imaging controller 74 may set imaging conditions in a case of performing the imaging. The imaging conditions are, for example, a direction (angle) of the camera, a zoom magnification (angle of view), a shutter speed, an F number, a white balance, an ISO sensitivity, a focus, a flash control, and the like. As a result, optimal imaging depending on the environment can be performed.

### Image Input Service

The device 10 may provide an image input service for receiving the input of the image 90 from the external device. Specifically, the acquisition unit 70 acquires the image 90 of the user 18 from the external device. The external device is, for example, a smartphone, a tablet terminal, a wearable terminal, a personal computer, a server computer, a USB memory, a memory card, and the like.

For example, the acquisition unit 70 may acquire the image 90 by pairing the smartphone or the like of the user 18 with the device 10 via wireless connection. Further, for example, the acquisition unit 70 may acquire the image 90 stored in a cloud storage. Furthermore, for example, the acquisition unit 70 may acquire the image 90 transmitted to a specific e-mail address or a messaging application.

For example, the device 10 may be provided with an input/output I/F such as a USB port and a memory card slot, and the acquisition unit 70 may acquire the image 90 via the input/output I/F. In addition, for example, a docking station with the smartphone or the like may be provided in the device 10, and the image 90 may be acquired from the smartphone of the user 18 via the docking station.

### Combination Service

The device 10 may provide a combination service for combining content 92 with the image 90 of the user 18. Specifically, the combination unit 72 generates a composite image 94 by combining the image 90 with the content 92. The phrase "combination" includes a method in which the image 90 and the content 92 do not overlap each other, in addition to a method in which the image 90 and the content 92 overlap each other. For example, the image 90 and the content 92 may be connected by being arranged in a horizontal direction or a vertical direction, or the content 92 may be disposed along an outer periphery of the image 90.

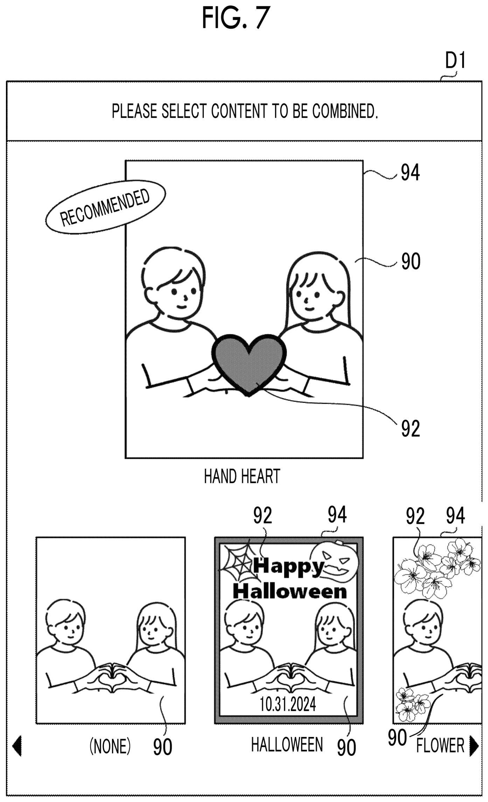

FIG. 7 is an example of a screen D1 for selecting the content displayed on the touch panel 30 by the display controller 77. The combination unit 72 may be able to combine various types of content 92 with the image 90. In addition, the combination unit 72 may receive selection of the content 92 to be combined.

As a specific method of the combination, for example, a known method such as a frame combination, a combination of a stamp and a sticker, superimposition of an augmented reality (AR) animation, and background combining can be applied as appropriate. For example, the combination unit 72 may dispose the content 92 such as a predetermined figure, photograph, or illustration at a position corresponding to a predetermined part (for example, head and limbs) of the subject in the image 90 (see an example of "hand heart" in FIG. 7). The predetermined part of the subject in the image 90 can be specified by using a known posture estimation technique for estimating a posture of the subject from the image.

In addition, for example, the combination unit 72 may combine the content 92 corresponding to a specific theme with the image (see examples of "Halloween" and "flower" in FIG. 7). In addition, for example, the combination unit 72 may combine the content 92 such as a real person such as a celebrity and an athlete, and a fictional character in a movie and a comic with the image 90.

### Image Processing Service

The device 10 may provide an image processing service for the image 90. Specifically, the image processing unit 73 may perform various types of image processing on the entire image 90 or a portion thereof. For example, the image processing unit 73 may correct brightness, chroma saturation, contrast, lighting, noise, resolution, and the like of the entire image 90. Further, for example, the image processing unit 73 may convert the entire image 90 into monochrome, sepia, and any tone.

In addition, for example, the image processing unit 73 may align the image tilted due to the tilt of the camera during the imaging in the horizontal direction and the vertical direction, or may correct distortion of the image caused by a wide-angle lens and a fisheye lens. In addition, for example, the image processing unit 73 may recognize a face portion in the image 90 and adjust smoothness and brightness of the skin or adjust a size of the eyes. In addition, for example, the image processing unit 73 may remove or blur a background portion in the image 90, or trim the image 90 into an optimal composition.

### Printing Service

The device 10 may provide a service for printing the image 90 of the user 18 on the recording medium by the printer 50. Specifically, the output unit 78 performs control such that at least one of the printers 50 is selectively used to print the image 90 captured by the camera 31 on the recording medium. In addition, the output unit 78 may control the printer 50 to print the image 90 acquired from the external device, the composite image 94, and the image 90 after the image processing on the recording medium instead of the image 90 captured by the camera 31. The composite image 94 and the image 90 after the image processing are examples of a "processed image" according to the present disclosure.

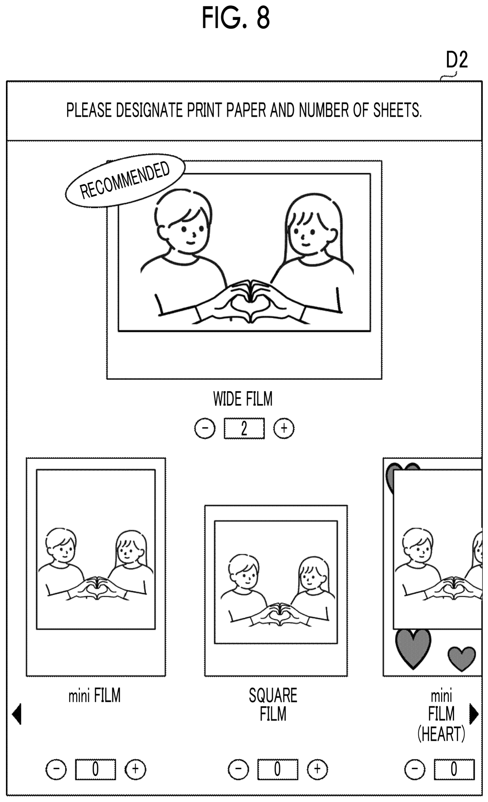

The selection unit 82 selects the printer 50 to be used. For example, the selection unit 82 may acquire designation information on designation of the type of the recording medium on which the printing is performed, and select the printer 50 based on the designation information. FIG. 8 is an example of a screen D2 for designating the type of the recording medium displayed on the touch panel 30 by the display controller 77. As described above, the selection unit 82 may receive designation of at least one type of the plurality of types of recording media such as a mini film, a wide film, and a square film. For example, in a case in which the wide film is designated, the selection unit 82 selects the printer 50 that accommodates the wide film.

Further, the selection unit 82 may receive designation of the number of printed sheets for each type of the recording medium. In a case of performing the printing on the plurality of recording media, the selection unit 82 may select two or more printers 50. In this case, the output unit 78 performs control such that the selected two or more printers print the image 90 on the recording medium. The "plurality of recording media" may be of the same type or different types. As described above, the printing service includes the service for printing the image on at least one type selected from among the plurality of types of recording media.

### Storage Service

The device 10 may provide a storage service for storing the image 90 of the user 18 in a storage device. Specifically, the output unit 78 stores the image 90 in the server device 60 and manages the data in a format accessible from the terminal owned by the user 18.

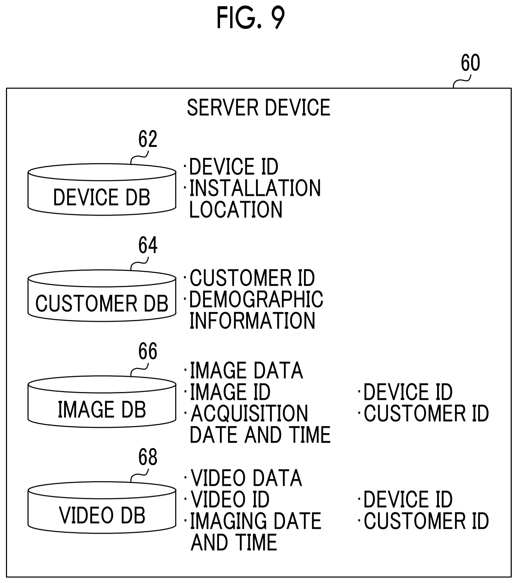

FIG. 9 illustrates an example of a schematic configuration of the server device 60. The server device 60 includes a device database (DB) 62, a customer DB 64, an image DB 66, and a video DB 68. Each DB is, for example, constructed by a software program that provides a function of a database management system (DBMS). The server device 60 is configured to write and read data to and from each DB.

The device DB 62 records identification information (device ID) of the device 10 and an installation location of the device 10 in association with each other. The customer DB 64 records identification information (customer ID) of the user 18 and demographic information in association with each other. The demographic information is, for example, statistical data for quantitatively analyzing the attributes and the characteristics of the user 18, such as gender, age, number of persons, relationship (family and friends) in a case of a group, physique, hobby, preference, occupation, income, and residence.

The image DB 66 records the data of the image 90, identification information (image ID) of the image 90, an acquisition date and time, an acquisition-source device ID, and the customer ID in association with each other. A form may be adopted in which the image data itself is stored in another storage device, and the address of the image data in the storage device may be recorded. The video DB 68 will be described later.

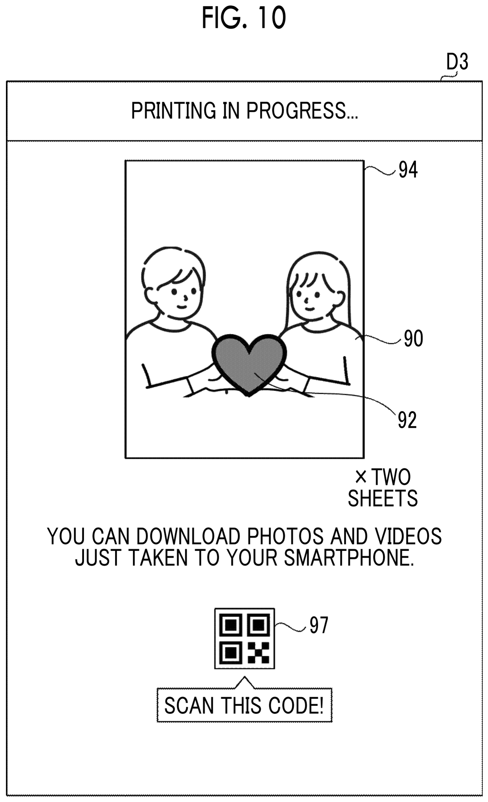

FIG. 10 is an example of a screen D3 illustrating storage information of the image 90 displayed on the touch panel 30 by the display controller 77. As illustrated in FIG. 10, the output unit 78 may perform control such that the storage information of the image 90 is displayed on the touch panel 30 as a two-dimensional code 97. The two-dimensional code 97 includes, for example, the address of the server device 60 and the image ID. The user 18 can access the image 90 by scanning the two-dimensional code 97 with his/her smartphone or the like.

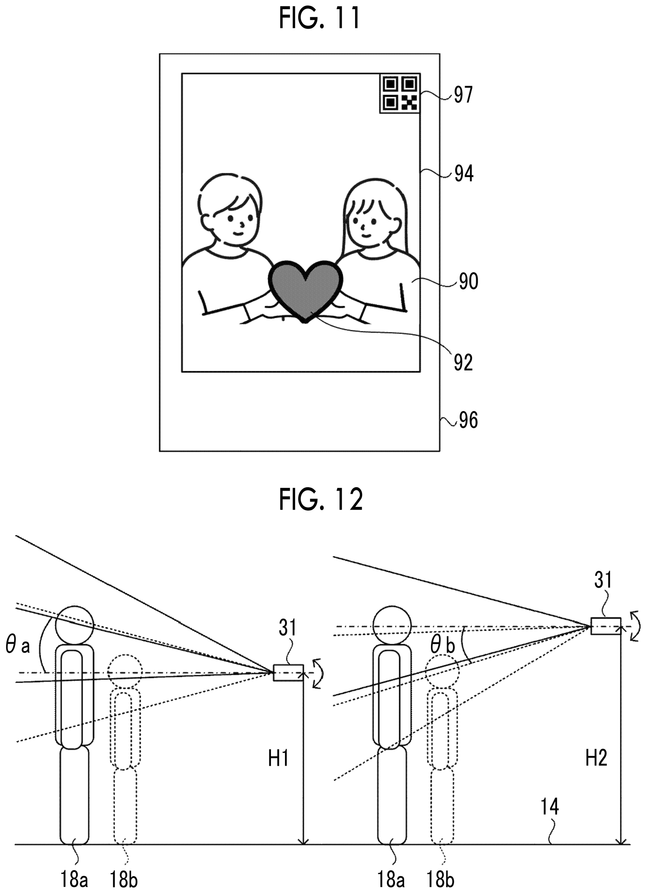

In addition, as illustrated in FIG. 11, the output unit 78 may perform control such that the two-dimensional code 97 is printed on the recording medium 96 together with the image 90. In this case, since the two-dimensional code 97 can be scanned at any time using the printed matter, the usability can be improved. In addition, the two-dimensional code 97 can also be replaced with other encoded codes such as a barcode and text data.

### Video Output Service

The device 10 may provide a video output service for capturing a video including a state in which the user 18 uses the device 10 by the camera 31 and outputting the video. For example, the device 10 may store the video in the storage device accessible from the terminal owned by the user 18.

Specifically, the output unit 78 may store the video in the server device 60 including the video DB 68 and manage the data in a format accessible from the terminal owned by the user 18. The video DB 68 records data of the video, identification information (video ID) of the video, an imaging date and time, an acquisition-source device ID, and the customer ID in association with each other. A form may be adopted in which the video data itself is stored in another storage device, and the address of the video data in the storage device may be recorded. As in the examples of FIGS. 10 and 11, the output unit 78 may output the storage information of the video as the two-dimensional code such that the user 18 can access the video.

Further, for example, the output unit 78 may output the video to a live streaming distribution function on a predetermined social networking service (SNS) 58 platform. Account information of the SNS 58 may be registered in the customer DB 64 together with the customer ID, and the user 18 may perform the setting in advance to enable smooth distribution.

### Presentation Service

The device 10 may provide a presentation service using at least one of the illumination devices 26 and 34 or the acoustic device 33. Specifically, the presentation controller 75 sets the presentation based on processes such as the imaging service, the combination service, the printing service, and the like. For example, the presentation controller 75 may perform more splendid lighting presentation and acoustic notification than before at a timing at which the recording medium 96 after the printing is discharged.

The presentation controller 75 may notify of the discharge port selected by the selection unit 82 using at least one of the illumination devices 26 and 34 or the acoustic device 33. For example, the presentation controller 75 may notify of the discharge port 52 selected by the selection unit 82 by turning on the illumination devices 26 and 34 corresponding to the discharge port 52 selected by the selection unit 82 at a timing at which the recording medium 96 after the printing is discharged. As a result, the user 18 can intuitively understand the discharge port 52. In addition, for example, the presentation controller 75 may provide the presentation that can intuitively understand the discharge port 52 by devising the volume of the acoustic device 33 and the position of the speaker. In addition, for example, the presentation controller 75 may notify of the discharge port 52 by voice such as "Coming out from the right" by the acoustic device 33.

### Projection Service

The device 10 may provide a projection service using the projection device 35. Specifically, the projection controller 76 determines the content of the projection image 98 based on the processes constituting the imaging service, the combination service, the printing service, and the like. For example, the projection controller 76 may project the projection image 98 having more splendid content than before at a timing at which the recording medium 96 after the printing is discharged.

In the example of FIG. 1, the projection controller 76 generates the projection image 98 including the text "HAPPY" and projects the projection image 98 to the floor surface. In addition, the projection controller 76 generates the projection image 98 by converting the image in which the user 18 is captured into a comic style, and projects the projection image 98 to the wall surface. As described above, by projecting the projection image 98 to the wall, the floor, the body of the user, and the like in the surroundings, it is possible to improve the presentation effect and also expect a high advertising effect by attracting the attention of a person other than the user, such as a passerby.

### Advertising Service

The device 10 may provide an advertising service to an unspecified user candidate around the device 10 in an idling state. The "idling state" refers to a state in which the device 10 waits for an application for the service from the user 18 after the device 10 is activated. The "unspecified user candidate" is a person who may use the device 10, such as a passerby.

For example, the presentation controller 75 may perform the presentation that prompts the use of the device 10 by using at least one of the illumination devices 26 and 34 or the acoustic device 33. In addition, for example, the projection controller 76 may project the projection image 98 having content that prompts the use of the device 10. In addition, for example, the display controller 77 may display a screen having content that prompts the use of the device 10 on the touch panel 30.

The above is the basic function of the device 10, but the device 10 according to the present embodiment further has a function of selecting an appropriate printer 50 based on the height of the user 18. As a result, the convenience of the user is improved, and the user satisfaction is improved. Hereinafter, details of this function will be described.

The detection unit 81 detects (acquires) height information on a height of the user 18. The height information may be, for example, a value indicating a specific height of the user 18 or information on an attribute related to the height. For example, it can be estimated that the height is relatively low in the attribute such as a child, a woman, a wheelchair user, and the like, and it can be estimated that the height is relatively high in the attribute such as an adult and a man.

For example, the detection unit 81 may estimate the height information based on the height and the elevation/depression angle of the camera 31. A method of estimating the height information based on a height H and an elevation/depression angle θ of the camera 31 will be described with reference to FIG. 12. FIG. 12 is a schematic diagram illustrating a state in which a user 18a having a relatively high height and a user 18b having a relatively low height are imaged by the camera 31.

The height of the camera 31 is set to a height H1 in a left diagram and is set to a height H2 in a right diagram. The "height of the camera 31" is a length of a perpendicular line from a predetermined starting point of the camera 31 to a floor surface 14 on which the device 10 is installed. As the starting point of the camera 31, for example, a rotation axis in a case of adjusting the elevation/depression angle θ of the camera 31 can be applied. In addition, it is assumed that the user 18 cannot adjust the height of the camera.

It is assumed that each user adjusts the elevation/depression angle θ of the camera 31 to match the height of the user, specifically, to position the face of the user near the center of the image 90. For example, as illustrated in the left diagram, in a case in which the height of the camera 31 is the H1 that is relatively low, the user 18a having a high height adjusts the camera 31 upward such that the elevation angle becomes θa. As illustrated in the right diagram, in a case in which the height of the camera 31 is the H2 that is relatively high, the user 18b having a low height adjusts the camera 31 downward such that the depression angle becomes θb.

That is, it is assumed that a combination of the height of the camera 31, the elevation/depression angle, and the height is determined to some extent. The detection unit 81 may estimate the height of the user 18 based on the height and the elevation/depression angle of the camera 31. For example, the detection unit 81 may hold a table in which the combination of the height of the camera 31, the elevation/depression angle, and the height is determined in advance, and may estimate the height of the user 18 based on the table and the height and the elevation/depression angle of the camera 31.

The detection unit 81 may detect the elevation/depression angle of the camera 31 using, for example, a sensor such as an angle sensor and an acceleration sensor.

The height of the camera 31 is different depending on whether the device 10 is in the connected state or the separated state. In a case in which the device 10 is in the connected state, the detection unit 81 may use a predetermined value as the height of the camera 31. In the connected state, the sum of the height of the first housing 11 and the height from the bottom surface of the second housing 12 to the camera 31 is the height of the camera 31. These heights are known, and thus the height of the camera 31 as the total value can be calculated in advance.

On the other hand, in a case in which the device 10 is in the separated state, the detection unit 81 may acquire information on a current height of the camera 31. The "information on the height of the camera 31" may be, for example, a specific value indicating the height of the camera 31 or information from which the height of the camera 31 can be derived. For example, in a case in which the device 10 is in the separated state and the second housing 12 is placed on the stand 13 having any height, the height of the camera 31 is the sum of the height of the stand 13 and the height from the bottom surface of the second housing 12 to the camera 31. The height from the bottom surface of the second housing 12 to the camera 31 is known, and thus the height of the camera 31 can be derived as long as the height of the stand 13 is known.

The detection unit 81 may request manual input of the information on the current height of the camera 31. For example, the detection unit 81 may request the input of the height of the camera 31 or request the input of the height of the stand 13. The request may be made by, for example, displaying the request on the touch panel 30.

In addition, for example, in a case in which the device 10 is in the separated state, the detection unit 81 may estimate the information on the current height of the camera 31 based on the height and the elevation/depression angle of the object in a case in which the elevation/depression angle is adjusted in accordance with the object having a known height. The "object having a known height" is, for example, the worker whose height is known. As described above, since the combination of the height of the camera 31, the elevation/depression angle, and the height is determined to some extent, the height of the camera 31 can be easily estimated from the elevation/depression angle and the known height.

The detection unit 81 may detect the height of the camera 31 or the height of the stand 13 by, for example, a sensor such as an atmospheric pressure sensor, an ultrasound sensor, an infrared sensor, and an optical sensor. The atmospheric pressure sensor is a sensor that detects a change in a surrounding atmospheric pressure, and can calculate the height of the camera 31 in the separated state by measuring, for example, a difference between an atmospheric pressure in the connected state and an atmospheric pressure in the separated state. The ultrasound sensor, the infrared sensor, and the optical sensor are sensors that detect a distance by using the reflection of ultrasound waves, infrared rays, and light, respectively, and can calculate the height of the camera 31 in the separated state by measuring, for example, a distance to the floor surface 14.

The detection unit 81 may estimate the height information based on the height and the elevation/depression angle of the touch panel 30 in addition to or instead of the camera 31. It is assumed that the user 18 adjusts the elevation/depression angle of the touch panel 30 to be easily visible, so that the height of the user 18 can be easily estimated from the height and the elevation/depression angle of the touch panel 30. The "height of the touch panel 30" is a length of a perpendicular line from a predetermined starting point of the touch panel 30 to the floor surface 14 on which the device 10 is installed.

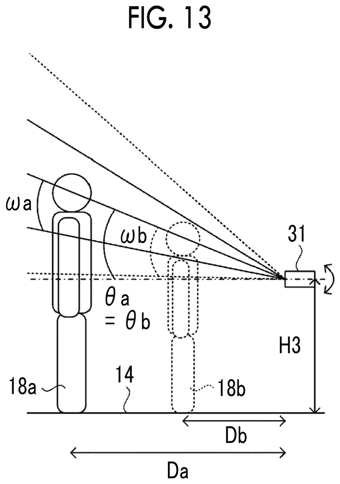

Further, for example, the detection unit 81 may estimate the height information based on the height, the elevation/depression angle, and the angle of view of the camera 31. A method of estimating the height information based on the height H, the elevation/depression angle θ, and an angle of view ω of the camera 31 will be described with reference to FIG. 13. In FIG. 13, the height of the camera 31 is set to H3.

In the device 10, since a standing position of the user 18 is not particularly limited, a distance D from the camera 31 to the user 18 may change. In the example of FIG. 13, the user 18a stands at a position at a distance Da, and the user 18b stands at a position at a distance Db shorter than the distance Da. In this case, although the heights of the users are different, an elevation angle θa in a case of imaging the user 18a and an elevation angle θb in a case of imaging the user 18b may match.

Meanwhile, it is assumed that each user adjusts the angle of view ω such that the face of the user is appropriately sized in the image 90 after deciding the standing position, or adjusts the standing position (distance D) after deciding the angle of view ω. In the example of FIG. 13, an angle of view ωa in a case of imaging the user 18a is adjusted to be smaller than an angle of view ωb in a case of imaging the user 18b.

That is, it is assumed that a combination of the height of the camera 31, the elevation/depression angle, the angle of view, and the height is determined to some extent. In other words, even in a case in which the elevation/depression angle θ is the same, the height may be different in a case in which the angle of view ω is different. Therefore, the detection unit 81 may take the angle of view into account in addition to the height and the elevation/depression angle of the camera to easily and accurately estimate the height of the user. For example, the detection unit 81 may hold a table in which the combination of the height of the camera 31, the elevation/depression angle, the angle of view, and the height is determined in advance, and estimate the height of the user 18 based on the table and the height, the elevation/depression angle, and the angle of view of the camera 31.

Further, for example, the detection unit 81 may acquire the height information from the external device. The external device is, for example, a smartphone, a tablet terminal, a wearable terminal, a personal computer, a server computer, a USB memory, a memory card, and the like.

Further, for example, the detection unit 81 may detect the height information by a three-dimensional sensor such as light detection and ranging (LiDAR).

The selection unit 82 selects at least one printer 50 based at least on height information. FIG. 14 illustrates an example of information on each printer 50. In FIG. 14, identification information (printer ID) of each printer 50, the type of the recording medium to be accommodated, a remaining amount of the accommodated recording medium, a previous replenishment date of the recording medium, a position in each housing, a corresponding discharge port, and an appropriate height are associated with each other. The appropriate height is distinguished between the connected state and the separated state. The positions in the housing are the same as the suffixes of the reference numerals of the printers 50A to 50J. The information on each printer 50 is stored in, for example, the storage unit 42 and is updated as appropriate.

For example, in the connected state, it is assumed that the user 18 designates the printing on the mini film and the height of the user 18 is less than 160 cm. In this case, the selection unit 82 selects the printer 50A with a printer ID "0001" or the printer 50B with a printer ID "0002". As illustrated in FIG. 2, the printers 50A and 50B are located at a relatively low position, and the recording medium can be discharged to a position that is easy even for the user 18 having a low height to reach.

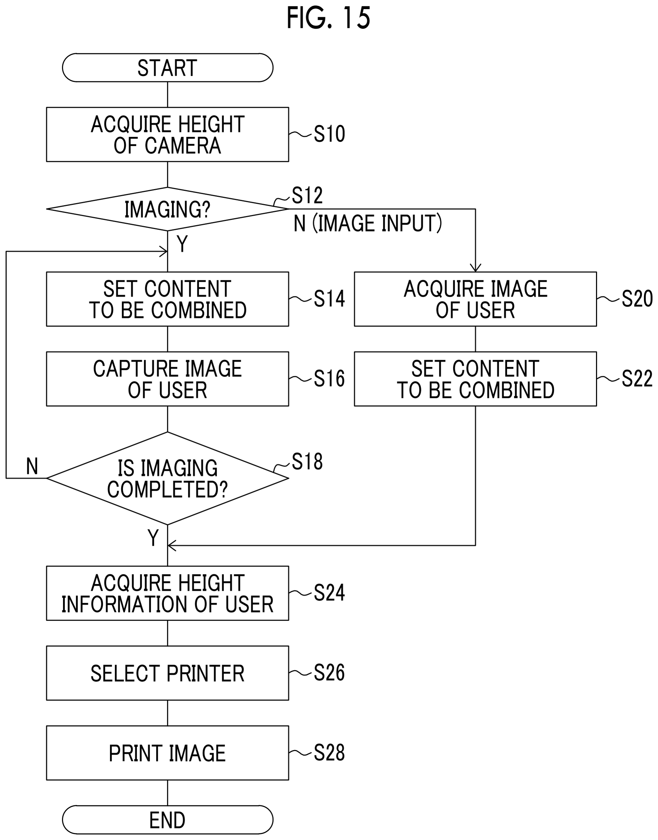

Next, an operation of the device 10 according to the present embodiment will be described with reference to FIG. 15. In the device 10, the CPU 41 executes a service providing process illustrated in FIG. 15 by executing the service providing program 43. The present process is executed, for example, in a case in which the user gives an instruction to start the execution.

In step S10, the detection unit 81 acquires the information on the current height of the camera 31. In step S12, the acquisition unit 70 receives whether or not to capture the image 90 with the camera 31.

In a case in which the image 90 is captured by the camera 31 (step S12 is Y), the process proceeds to step S14. In step S14, the combination unit 72 sets the content 92 to be combined, the image processing unit 73 sets the image processing conditions, or the imaging controller 74 sets the imaging conditions. In step S16, the acquisition unit 70 captures the image 90 of the user 18. The display controller 77 displays, on the touch panel 30, a preview image to which the content 92 set in step S14 is applied to a live view image by the camera 31 in a case of the imaging. In step S18, the output unit 78 determines whether or not the capturing of the image 90 for a predetermined number of images is completed. In a case in which the capturing is not completed, steps S14 to S18 are repeated.

On the other hand, in a case in which the image 90 is not captured by the camera 31 (step S12 is N), the process proceeds to step S20. The acquisition unit 70 acquires the image 90 of the user 18 from the external device. In step S22, the combination unit 72 sets the content 92 to be combined, or the image processing unit 73 sets the image processing conditions.

In a case in which the determination in step S18 is positive and step S22 is completed, the process proceeds to step S24. In step S24, the detection unit 81 acquires the height information of the user 18. In step S26, the selection unit 82 selects at least one printer 50 based at least on the height information. In step S28, the output unit 78 performs control such that the selected printer 50 prints at least one of the image 90 captured by the camera 31 or the processed image of the image on the recording medium, and ends the present process.

As described above, the device 10 according to the present embodiment is a service providing device that provides services including a service for printing the image 90 on the recording medium, the device 10 comprising: the first housing 11 including a first printer; and the second housing 12 including a second printer and a processor that performs control such that at least one of the first printer or the second printer is selectively used to print the image 90 on the recording medium. The first housing 11 and the second housing 12 are connectable and capable of providing the services in both a connected state and a separated state in which the first housing 11 and the second housing 12 are disconnected.

That is, the device 10 according to the present embodiment can be used in both the connected state and the separated state, so that the flexibility in a case of using the device 10 can be improved, and the customizability and the usability can be improved. For example, by installing the second housing 12 on a low stand 13 in the separated state, the user 18 having a low height, such as a child and a wheelchair user, can easily use the device 10, and universal design can be realized. Further, for example, since repair and replacement can be performed for each housing, the maintainability can be improved. In addition, for example, the first housing 11 can be used as the printer 50 of another device 10, or the second housing 12 can be used alone.

In addition, in the device 10 according to the present embodiment, the processor acquires the height information on the height of the user 18, and selects at least one of the first printer or the second printer based at least on the height information. As a result, the user 18 having a low height, such as a child and a wheelchair user, can easily use the device 10, and universal design can be realized. That is, the convenience of the user can be improved, and the user satisfaction can be improved.

In the above embodiment, the form has been described in which the device 10 comprises the discharge ports 52A to 52J corresponding to the respective printers 50A to 50J, but the present disclosure is not limited to this, and the number of the printers 50 and the number of the discharge ports 52 may be different from each other. For example, the device 10 may comprise a discharge mechanism that guides the recording medium discharged from the plurality of printers 50 to one discharge port. In addition, for example, the device 10 may comprise a discharge mechanism that guides the recording medium discharged from one printer 50 to any one of the plurality of discharge ports.

A form may be adopted in which the selection unit 82 selects the discharge port 52 in addition to or instead of the printer 50. For example, as illustrated in FIGS. 1 to 4, it is assumed that at least one of the first housing 11 or the second housing 12 comprises a plurality of discharge ports 52 disposed at different heights. In such a case, the selection unit 82 may select at least one discharge port 52 to be used, based on the height information.

Further, the height of the discharge port 52 is different depending on whether the device 10 is in the connected state or the separated state. Therefore, in the separated state, the detection unit 81 may request manual input of the information on the current height of the discharge port 52. For example, in a case in which the device 10 is in the separated state and the second housing 12 is placed on the stand 13 having any height, the height of the discharge port 52 is the sum of the height of the stand 13 and the height from the bottom surface of the second housing 12 to the discharge port 52. The height from the bottom surface of the second housing 12 to the discharge port 52 is known, and thus the height of the discharge port 52 can be derived as long as the height of the stand 13 is known. Therefore, for example, the detection unit 81 may request the input of the height of the discharge port 52 or request the input of the height of the stand 13. The request may be made by, for example, displaying the request on the touch panel 30.

### Second Embodiment

The device 10 according to the second embodiment has the function of selecting the appropriate printer 50 based on various conditions in addition to or instead of the height information. As a result, it is possible to achieve both improvement in service quality and enhancement in operational efficiency. Hereinafter, details of this function will be described. The basic configuration and functions of the device 10 are the same as those of the first embodiment, and thus some descriptions will be omitted.

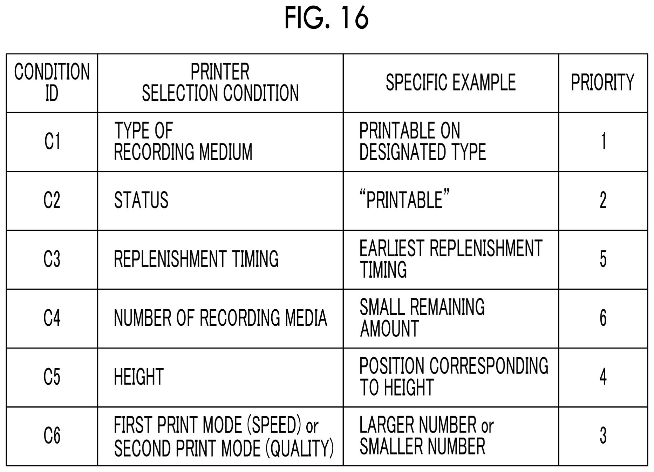

The selection unit 82 selects at least one printer 50 such that a condition having relatively high priority among a plurality of predetermined conditions for selecting the printer 50 is satisfied. FIG. 16 illustrates an example of the plurality of conditions and the priority of the conditions. The priority number indicates that the smaller the number is, the higher the priority is. Hereinafter, each of the conditions will be described by a condition ID in a case in which the conditions are distinguished from each other.

A condition C1 is a condition related to the type of the recording medium. For example, the selection unit 82 selects the printer 50 that can perform the printing on the designated type of the recording medium (see FIGS. 8 and 14).

A condition C2 is a condition related to a status of each printer 50. The status includes, for example, ready-to-print, printing-in-progress, out-of-recording medium, and error states. For example, the selection unit 82 selects the printer 50 of which the status is the ready-to-print state. In addition, for example, in a case in which there is no printer 50 of which the status is the ready-to-print state, the selection unit 82 may select the printer 50 of which the status is the printing-in-progress state. In addition, for example, the selection unit 82 may not select the printer 50 of which the status is the out-of-recording medium and error states.

A condition C3 is a condition related to a replenishment timing of a replenishment member for the printer 50. The selection unit 82 acquires information on the replenishment timing, for example, as illustrated in FIG. 14, and selects the printer 50 based on the information. For example, the selection unit 82 selects the printer 50 in order of the earliest replenishment timing of the replenishment member. As a result, the use of the replenishment member deteriorated over time is avoided, and the printing quality is maintained. The replenishment member includes, for example, the recording medium and an ink in an ink jet type printer.

A condition C4 is a condition related to the number of the recording media. The selection unit 82 acquires information on a distribution of the number (remaining amount) of the recording media in each printer 50, for example, as illustrated in FIG. 14, and selects the printer 50 based on the information. For example, the selection unit 82 selects the printer 50 in which a small number of the recording media, which is 1 or more. As a result, since the recording medium can be used up, the operational efficiency can be enhanced in a case in which the recording medium is of a cartridge type.

In the condition C4, the selection unit 82 may manage the plurality of printers 50 by dividing the plurality of printers 50 into groups, and may select any one of the groups based on information on a distribution of the number (remaining amount) of the recording media for each group, thereby selecting the printers 50 included in the group. As the number of the recording media for each group, for example, various representative values such as an average value, a median value, a maximum value, or a minimum value of the number of the recording media in each printer 50 included in the group can be appropriately applied.

The grouping may be performed, for example, based on a maintenance unit of the printer 50. For example, a set of a plurality of printers 50 mounted on the same drawer mechanism and deployed outside the housing as an integrated unit during maintenance may be set as one group. For example, in FIG. 2, the printers 50 may be divided into a group including the printers 50A, 50B, and 50C, a group including the printers 50D, 50E, and 50F, a group including the printers 50G and 50H, and a group including the printers 50I and 50J. As a result, since replenishment of the recording medium can be easily performed in units of groups, it is possible to suppress a necessity to maintain a large number of the printers 50 at one time and to improve efficiency of replenishment work.

A condition C5 is a condition related to the height of the user 18. The detection unit 81 acquires the height information as in the first embodiment. The selection unit 82 selects the printer 50 based on the height information.

A condition C6 is a condition related to whether to prioritize speed or quality in a case in which the printing is performed on the plurality of recording media. The selection unit 82 can switch between a first print mode and a second print mode in which the number of the printers 50 to be selected is smaller than the number of the printers 50 to be selected in the first print mode. Specifically, the selection unit 82 sets the first print mode in a case in which the speed is prioritized, and sets the second print mode in a case in which the quality is prioritized.

The first print mode is a mode in which a printing waiting time is shortened by controlling the printing to be performed in parallel by a larger number of the printers 50. For example, the selection unit 82 selects all the printers 50 that satisfy the condition C6 having higher priority than the condition C6, and ignores the condition having lower priority than the condition C6. This allows each printer 50 to be used equally, which contributes to preventing the recording medium from running out and reducing the replenishment frequency.

The second print mode is a mode in which the printing quality is emphasized by controlling the printing to be performed by a smaller number of the printers 50 to suppress the appearance of a slight color difference for each printer 50. For example, the selection unit 82 selects one optimal printer 50 by continuing narrowing down even for the condition having lower priority than the condition C6. As a result, since the recording medium can be used up, the operational efficiency can be enhanced in a case in which the recording medium is of a cartridge type.

In the first print mode, for example, in a case in which there is only one printer 50 that satisfies the condition having higher priority than the condition C6, the use of the printer 50 a plurality of times is allowed. In addition, in the second print mode, for example, in a case in which the selected printer 50 runs out of the recording medium in the midway through the printing, it is allowed to use the next appropriate printer 50.

The selection unit 82 may receive designation of the first print mode or the second print mode. For example, the selection unit 82 may receive the designation of the mode by an administrator (that is, a service provider) of the device 10. Further, for example, the selection unit 82 may receive the designation of the mode by the user 18 before the printing.

The selection unit 82 may switch between the first print mode and the second print mode based on a time taken for the printing. Specifically, the selection unit 82 compares a preparation period from when the printer 50 is instructed to print the image 90 to when the printer 50 starts the printing with a printing period from when the printer 50 starts the printing to when the printing is completed. The preparation period includes, for example, a time required to transfer the image 90 to the printer 50 and a time required to start up the printer 50. The printing period includes, for example, a time taken for printing (form) the image 90 on the recording medium and a time taken for discharging the recording medium on which the printing is completed.

In a case in which the preparation period is shorter than the printing period, the selection unit 82 switches to the first print mode. In this case, since the printing waiting time occurs in a case of printing by one printer 50, the printing waiting time is shortened by setting the first print mode in which the printing is performed by a larger number of the printers 50. On the other hand, in a case in which the preparation period is longer than the printing period, the selection unit 82 switches to the second print mode. In this case, since the printing waiting time does not occur, the printing quality is improved by setting the second print mode in which the printing is performed by a smaller number of the printers 50.

The lengths of the preparation period and the printing period are different depending on a printing method of each printer 50 and the type of the recording medium. For example, as the size of the recording medium is larger, the volume of the image 90 increases, so that the transfer time (preparation period) increases, and the printing time tends to be extended. Examples of the printing method of the printer 50 include an instant photo method, a sublimation-type thermal transfer method, and an ink jet method.

The selection unit 82 selects at least one printer 50 in the end by sequentially narrowing down the printers 50 in accordance with the condition C1 having the first priority, the condition C2 having the second priority, the condition C6 having the third priority, ..., which are set in advance. In a case in which there is no printer 50 that satisfies a certain condition, the selection unit 82 may interrupt the narrowing down at the point in time, or continue the narrowing down with the condition having the next highest priority.

In addition, the priority of each of the conditions can be changed at any timing. For example, the selection unit 82 may receive the change in the priority. For example, the selection unit 82 may receive the change in the priority by at least one of the administrator of the device 10 or the user 18. As a result, it is possible to make an appropriate selection in accordance with the operation status and the needs.

In addition, for example, the selection unit 82 may change the priority depending on whether the device 10 is in the connected state or the separated state. For example, the selection unit 82 may increase the priority of the condition C5 related to the height in the connected state and may decrease the priority of the condition C5 in the separated state. This is because, in the connected state, it is considered that the printer 50 installed in the upper second housing 12 may be difficult to use for some users 18 (particularly, the user 18 having a low height).

In a case of performing the printing on the plurality of recording media, the display controller 77 may perform control of prompting taking-out of the recording medium after the printing from the discharge port 52 of the recording medium. In a case of performing the printing on the plurality of recording media, there is a possibility that a problem such as the discharge port 52 being clogged or the recording medium after the printing being pushed out and falling may occur. In order to prevent this problem, the display controller 77 may confirm that the recording medium after the printing is taken out from the discharge port 52.

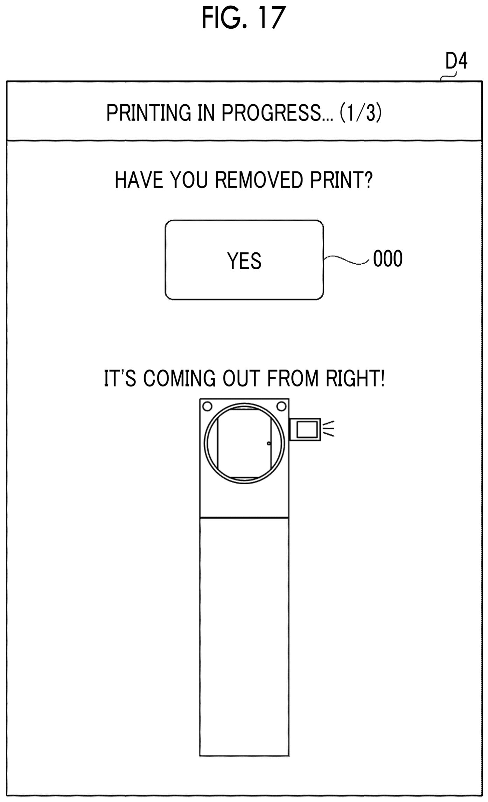

FIG. 17 is an example of a screen D4 for confirming the taking-out, which is displayed on the touch panel 30 by the display controller 77. The screen D4 includes a button 99 and a guide diagram of the discharge port 52. After taking out the recording medium, the user 18 presses the button 99 on the screen D4. In a case in which the button 99 is pressed, the display controller 77 instructs the output unit 78 to start the printing on the next recording medium.

In addition, the display controller 77 may perform control of prompting the taking-out of the recording medium only in a case in which the discharge port 52 that has already been used is reused or all the discharge ports 52 are filled. That is, in a case in which the unused discharge port 52 can be used, the display controller 77 may not prompt the taking-out of the recording medium.

In addition, a sensor may be provided in each discharge port 52, and in a case in which the sensor detects the remaining recording medium, the display controller 77 may perform control of prompting the taking-out of the recording medium. As the sensor in this case, for example, an optical sensor, an ultrasound sensor, a pressure sensor, an infrared sensor, a capacitance sensor, and the like can be applied as appropriate.

The display controller 77 may detect a change in the number of the recording media in each printer 50 and perform control of prompting the user of the recording medium for which the change is relatively small. As a result, it is possible to prevent the recording medium from being left, and it is possible to suppress the deterioration of the recording medium over time and the degradation of the printing quality caused by the deterioration. For example, the display controller 77 may set the type of the recording medium displayed as "recommended" on the screen D2 of FIG. 8 to the recording medium in which the change in the number of sheets is relatively small.

The display controller 77 may detect a distribution of the number of the recording media in each printer 50, and perform control of prompting the use of the recording medium of which the number is relatively large in a case in which there is the recording medium of which the number is smaller than a predetermined threshold value. That is, the use of the recording medium having a larger remaining amount may be prompted in a stage in which the specific recording medium begins to run short. As a result, it is possible to prevent the recording medium from running out. For example, the display controller 77 may set the type of the recording medium displayed as "recommended" on the screen D2 of FIG. 8 to the recording medium of which the number of sheets is relatively large.

In addition to or instead of the display prompting the taking-out of the recording medium and the display prompting the use of the recording medium by the display controller 77, for example, the acoustic device 33 may be used to perform the notification.

In addition, the output unit 78 may determine whether or not the work is appropriate based on the state of the target printer that is the printer 50 as a target for work. For example, in a case of performing the replenishment work of the recording medium, whether or not the work is appropriate can be determined by referring to the number of the recording media accommodated in the target printer. For example, the output unit 78 may determine that the work is the replenishment work in a case in which the number of the recording media is smaller than a predetermined threshold value (for example, 0 to 2 sheets). That is, the "state of the target printer" includes a state related to the number of the recording media accommodated in the target printer.

In a case in which it is determined that the replenishment work is appropriate, the display controller 77 may control the touch panel 30 to display information such as the type of the recording medium to be accommodated in the target printer, a previous replenishment date, and a position in the housing.

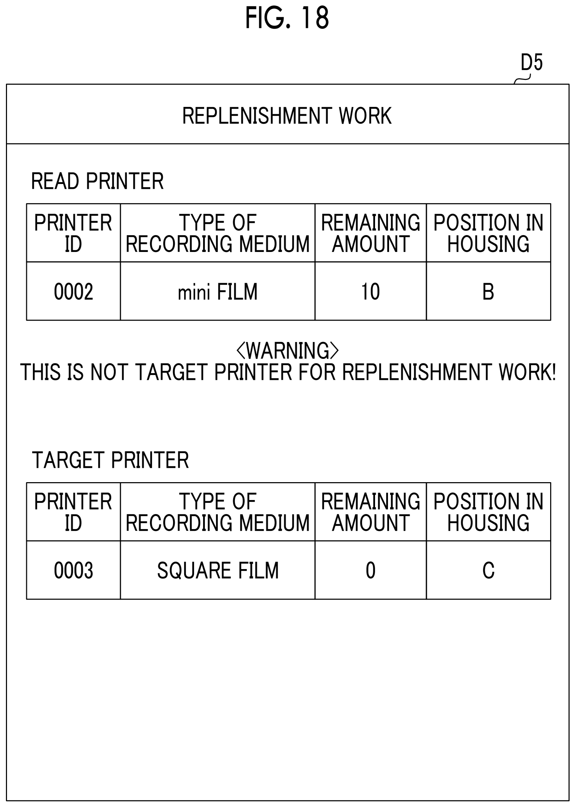

On the other hand, in a case in which it is determined that the replenishment work is inappropriate, the display controller 77 may control the touch panel 30 to display a warning indicating the determination. In addition, the display controller 77 may guide the worker to a correct target printer by displaying information for guiding a correct printer position on the touch panel 30. FIG. 18 is an example of a screen D5 for performing the warning and the guide of the correct target printer, which is displayed on the touch panel 30 by the display controller 77.

In addition, for example, whether or not the work is appropriate can be determined even in a case of performing maintenance work of the printer 50. For example, the output unit 78 may determine that the work is the maintenance work in a case in which the status is the error state. That is, the "state of the target printer" includes a state related to the status of the target printer. The replenishment work and the maintenance work are examples of "work" according to the present disclosure.

The state of the target printer may be acquired by assigning identification information (printer ID of FIG. 14) to each of the plurality of printers 50, and reading the identification information. For example, a two-dimensional code indicating the identification information may be attached to an outer surface of each printer 50, and then the two-dimensional code may be read by the camera 31. Further, for example, the two-dimensional code may be replaced with other encoded codes such as a barcode. Further, for example, text indicating the identification information may be described on the outer surface of each printer 50, and the text may be imaged by the camera 31 and read by optical character recognition (OCR). Further, for example, the worker may manually input the identification information via the touch panel 30. In addition, for example, a radio frequency identification (RFID) tag including the identification information may be mounted on each printer 50, and the RFID tag may be read by an RFID reader provided in the device 10.

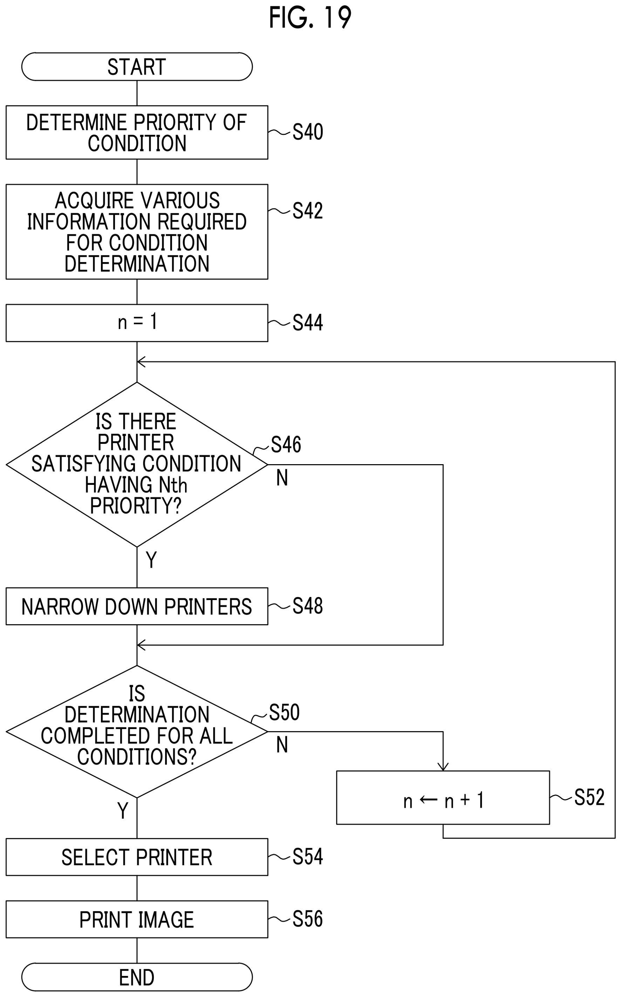

Next, an operation of the device 10 according to the present embodiment will be described with reference to FIG. 19. In the device 10, the CPU 41 executes a service providing process illustrated in FIG. 19 by executing the service providing program 43. The present process is executed, for example, in a case in which the user gives an instruction to start the execution.

In step S40, the selection unit 82 determines the priority of each of the conditions. For example, the selection unit 82 may receive the change in the priority set in advance, change the priority depending on whether the device 10 is in the connected state or the separated state, or change the priority based on the time taken for the printing. In step S42, the selection unit 82 acquires various types of information required for the determination for each of the conditions. For example, the selection unit 82 acquires the designation information on the designation of the type of the recording medium, the information on the status of the printer 50, the information on the replenishment timing of the replenishment member, the information on the distribution of the number of the recording media, the height information, and the like.

In step S44, the selection unit 82 sets a variable n to 1. In step S46, the selection unit 82 determines whether or not there is the printer 50 that satisfies the condition having n-th priority. In a case in which the determination result in step S46 is YES, the process proceeds to step S48, and the selection unit 82 narrows down the printers 50 that satisfy the condition having the n-th priority.

In a case in which step S48 is completed and in a case in which the determination result in step S46 is NO, the process proceeds to step S50. In step S50, the selection unit 82 determines whether or not the determination for all the conditions is completed. In a case in which the determination result in step S50 is NO, the variable n is incremented, and steps S46 to S50 are repeated. As a result, the selection unit 82 sequentially narrows down the printers 50 in accordance with the priority.

In a case in which the determination result in step S50 is YES, the process proceeds to step S54, and the selection unit 82 selects at least one final printer 50. In step S56, the output unit 78 performs control such that the selected printer 50 prints the image 90 on the recording medium, and ends the present process.

In FIG. 19, the form has been described in which the narrowing down is continued with the condition having the next highest priority in a case in which there is no printer 50 that satisfies a certain condition, but the present disclosure is not limited to this. For example, in a case in which there is no printer 50 that satisfies a certain condition, the narrowing down may be interrupted at the point in time. In this case, the process proceeds to step S54 at a point in time when the determination result in step S46 is NO.

Further, the present process may be combined with the service providing process according to the first embodiment (see FIG. 15). For example, by replacing the processes of steps S24 to S28 of the first embodiment with the processes of steps S40 to S56 of the second embodiment, it is possible to realize a service providing process in which different conditions can be flexibly applied.

As described above, the device 10 according to the present embodiment is a service providing device that provides services including a service for printing the image 90 on the recording medium, the device 10 comprising: a plurality of printers 50 each having an independent accommodating mechanism for the recording medium; and a processor. The processor selects at least one printer 50 such that the condition having relatively high priority among a plurality of predetermined conditions for selecting the printer 50 is satisfied.

That is, with the device 10 according to the present embodiment, since the condition related to the service quality (for example, the printing speed and the printing quality) and the condition related to the operational efficiency (for example, the number of the recording media) can be determined, the optimal printer 50 can be selected from both viewpoints. Therefore, it is possible to achieve both improvement in service quality and enhancement in operational efficiency.

### Third Embodiment

The device 10 according to the third embodiment has a function of managing at least one of the distribution or the number of various recording media accommodated in each printer 50. As a result, it is possible to achieve enhancement in operational efficiency through efficient management of the recording medium. Hereinafter, details of this function will be described. The basic configuration and functions of the device 10 are the same as those of the first embodiment and the second embodiment, and thus some descriptions will be omitted.

In the present embodiment, a mechanism that can accommodate a plurality of types of recording media and selectively perform the printing on the plurality of types of recording media in accordance with the selection is referred to as a "printing mechanism". The printing mechanism includes, for example, the plurality of printers 50 and the CPU 41.

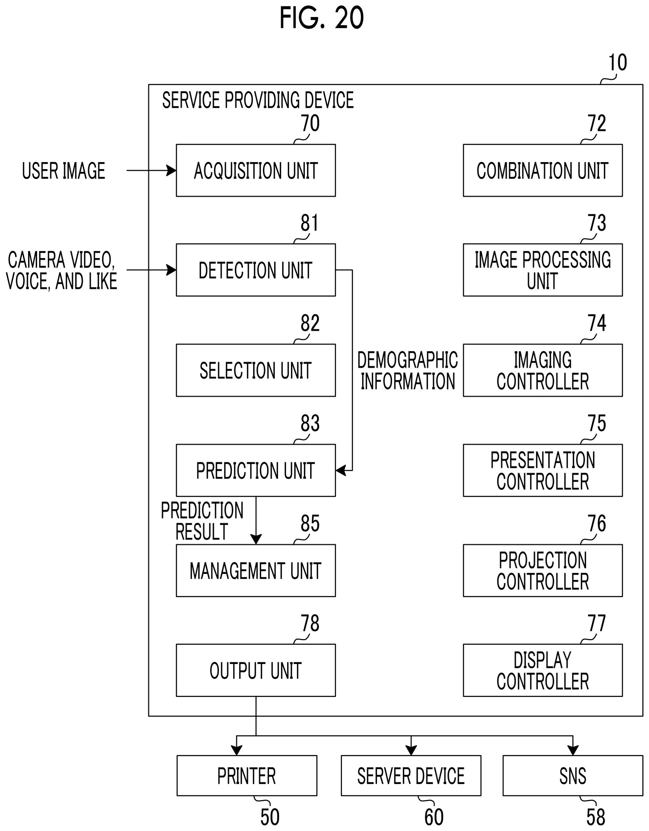

An example of a functional configuration of the device 10 according to the present embodiment will be described with reference to FIG. 20. The device 10 according to the present embodiment includes a prediction unit 83 and a management unit 85, in addition to the functional units of the device 10 according to the first embodiment. These functional units function in a case in which the CPU 41 executes the service providing program 43.

The detection unit 81 detects demographic information. Specifically, the detection unit 81 detects the demographic information of at least one of the user 18 or the unspecified user candidate. The detection unit 81 may detect the demographic information by, for example, an information detector including at least one of the camera 31 or the microphone 32.

The detection unit 81 may detect the demographic information by, for example, analyzing a still image and/or a camera video captured by the camera 31. In addition, the detection unit 81 may detect the demographic information by, for example, analyzing a voice signal obtained by receiving the voice of the user 18 or the user candidate via the microphone 32. Further, for example, the detection unit 81 may acquire the demographic information of the user 18 recorded in advance in the server device 60. Further, for example, the detection unit 81 may detect the demographic information by using a three-dimensional sensor such as LiDAR.

Further, the detection unit 81 may acquire environment information on an environment in which the device 10 is installed. The environment information includes at least one of information on an installation location of the device 10, information on weather at the installation location, information on an event at the installation location, or information on a date and time. Examples of the "installation location" include a country, a region, and a facility (for example, an amusement facility, a station, a retail store). Examples of the "weather" include cloud cover, rainfall, temperature, and humidity. Examples of the "event" include various events in a nearby region or facility, such as a fireworks festival, an exhibition, and a sports day. Examples of the "date and time" include the current year, month, and day, a weekday, and a holiday.

Specifically, the detection unit 81 may detect the environment information using the information detector. For example, the detection unit 81 may detect the weather from the camera video or may detect sound of the event (sound of fireworks or the like) from the voice. Further, the detection unit 81 may acquire information from a website, a database, and the like that provide the environment information. For example, the detection unit 81 may use an application programming interface (API) for acquiring the information on the weather or may access a tourism information site.

The management unit 85 performs recording medium management including management of at least one of the distribution or the number of the plurality of types of recording media accommodated in the printing mechanism, based on the demographic information. Specifically, the management unit 85 determines, in the recording medium management, at least one of the type and the number of the recording media accommodated in the printing mechanism or the number of replenishments, the replenishment frequency, or the replenishment timing of the recording medium to the printing mechanism based on the demographic information.

That is, managing the distribution of the recording medium means determining the type and the number (ratio) of the recording media accommodated in the printing mechanism. The distribution can be changed at any timing, and can be changed, for example, even while the device 10 is operating. Managing the number of the recording media means determining the number of replenishments, the replenishment frequency, the replenishment timing, and the like in accordance with the remaining amount or the consumption amount of the recording medium accommodated in the printing mechanism. The replenishment can be performed at any timing, and can be performed, for example, even while the device 10 is operating.

From the viewpoint of the operational efficiency, it is preferable that the replenishment frequency of the recording medium to the printing mechanism is as low as possible. Therefore, the management unit 85 may increase the distribution of the recording media that are consumed frequently. For example, the management unit 85 may manage the distribution of the recording media such as 40 mini films (equivalent to four printers 50) and 10 square films (equivalent to one printer 50). Further, for example, the management unit 85 may manage the number of sheets such as replenishing 20 mini films at 10:00 tomorrow and replenishing 10 square films.

Specifically, the management unit 85 performs the recording medium management based on a selection result of the recording medium in addition to the demographic information. Further, the management unit 85 may perform the recording medium management based on the environment information.

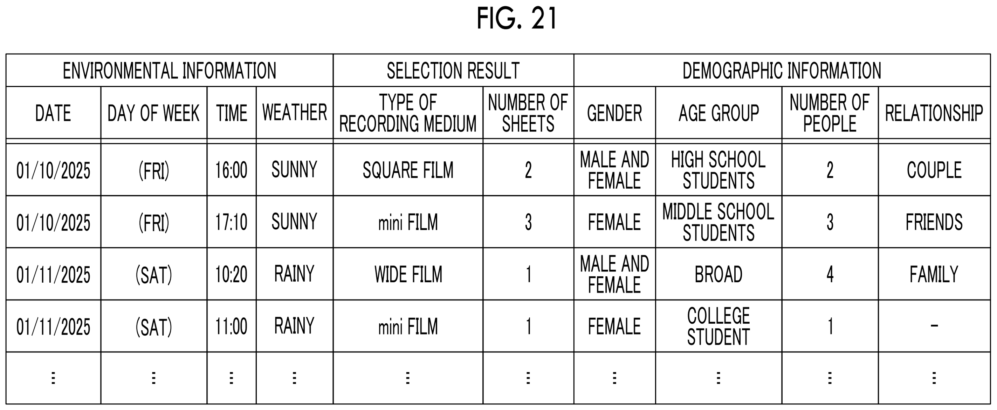

The management unit 85 may perform, for example, the recording medium management based on history information including a combination of the demographic information and the selection result of the recording medium. FIG. 21 illustrates an example of the history information. Here, the environment information on the date and time and the weather, the selection result of the recording medium, and the demographic information are associated with each other. The history information is a history including the selection result of the recording medium in the device 10, and is, for example, accumulated in the storage unit 42 and updated each time the device 10 is used.

Based on the history information, for example, it is possible to analyze a tendency in accordance with the demographic information, such as the mini film being popular among middle school students and the square film being popular among high school students. In addition, for example, it is possible to analyze a tendency in accordance with the environment information, such as an increase in the number of middle school student users in the afternoon on Thursday and an increase in the number of users in general on rainy days.

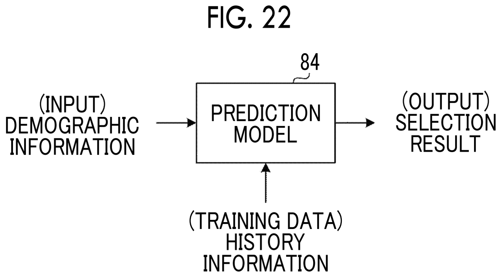

The prediction unit 83 may predict the selection result of the recording medium based on the demographic information of the unspecified user candidate. For example, as illustrated in FIG. 22, the prediction unit 83 may predict the selection result of the recording medium based on the demographic information of the user candidate by using a prediction model 84 that has been trained in advance using the history information as training data. As the prediction model 84, for example, a deep learning model such as a convolutional neural network (CNN) and a long short-term memory (LSTM) can be applied as appropriate. In such a case, the management unit 85 may perform the recording medium management based on a combination of the demographic information of the user candidate and the predicted selection result of the recording medium.

Hereinafter, examples of the recording medium management will be described. The detection unit 81 and the management unit 85 may use any one of the following examples or use a combination of a plurality of examples.

### Example 1

The detection unit 81 detects the demographic information of the user 18 using the information detector. The management unit 85 performs the recording medium management based on the demographic information of the user 18. For example, since the number of middle school student users is large in the last 24 hours, the distribution of the square film that is popular among middle school students nationwide is increased.

### Example 2

The detection unit 81 detects the demographic information of the user 18 using the information detector. The management unit 85 performs the recording medium management based on the demographic information of the user 18 and the history information. For example, in the device 10, since the number of middle school student users is the largest and the mini film is popular among the middle school students who use the device 10, the distribution of the mini film is increased. That is, the management is performed based on the nationwide tendency in Example 1, whereas the optimization for the device 10 is performed based on the history information in Example 2.

### Example 3

The detection unit 81 detects the demographic information of the user candidate using the information detector. The management unit 85 performs the recording medium management based on the demographic information of the user candidate. For example, in a case in which the accumulation of the history information is small at the initial installation of the device 10 and the number of middle school student passersby is large, the distribution of the square film that is popular among middle school students nationwide is increased.

### Example 4

The detection unit 81 detects the demographic information of the user candidate using the information detector. The management unit 85 may perform the recording medium management based on the demographic information of the user candidate and the history information. For example, since the number of middle school student passersby is particularly large today, it is predicted that the use of the mini film that is popular among the middle school students who use the device 10 will be increased. Therefore, the management, such as increasing the distribution of the mini film, is performed.

As the method of the recording medium management, for example, a statistical method may be used. Specifically, the demographic information and the history information may be statistically analyzed, and the recording medium management may be determined based on a predetermined rule set. Further, the rule set may include the environment information.

In addition, for example, a machine learning model that has been trained in advance to receive the demographic information as an input and output decision matters for the optimal recording medium management may be used. For example, the machine learning model can be obtained by learning about an optimal relationship between the demographic information and the recording medium management using the history information. In addition, for example, a model that optimizes the recording medium management based on real-time feedback of the recording medium management by a reinforcement learning method may be used. As the machine learning model, for example, a deep learning model such as a CNN and an LSTM can be applied as appropriate. Further, the environment information may be added to the input to the machine learning model.

The detection unit 81 may perform control of switching between a first detection mode in which the demographic information of the user 18 is detected by the information detector and a second detection mode in which the demographic information of the user candidate is detected by the information detector. For example, the detection unit 81 may be set to the second detection mode in the idling state and may switch to the first detection mode in a case in which the application for the service is received from the user 18.

In addition, the detection unit 81 may extract different demographic information between the first detection mode and the second detection mode. For example, in the first detection mode, detailed demographic information such as hobbies, preferences, and economic status from the clothing of the user 18 or emotions from the expression and the voice may be collected. On the other hand, in the second detection mode, basic demographic information of the user candidate, such as age, gender, and number of persons, may be collected. As a result, in the first detection mode, the demographic information of the user 18 is deeply collected to improve the accuracy of the recording medium management, and in the second detection mode, the demographic information of more user candidates is collected to ensure the real-time performance.

Further, the detection unit 81 may additionally extract a second item in the demographic information in a case in which the extraction result of a first item in the demographic information satisfies a predetermined condition. For example, the detection unit 81 may additionally extract a height difference (second item) in a case in which the number of persons (first item) is two or more. In this case, it is found that the mini film is popular in a case in which the number of persons is two or more and the height difference is large, and the square film is popular in a case in which the number of persons is two or more and the height difference is small, so that the accuracy of the recording medium management can be improved. On the other hand, in a case of one person, since the condition is not satisfied, the additional height difference is not extracted, so that the calculation load is reduced, and the processing speed can be improved.

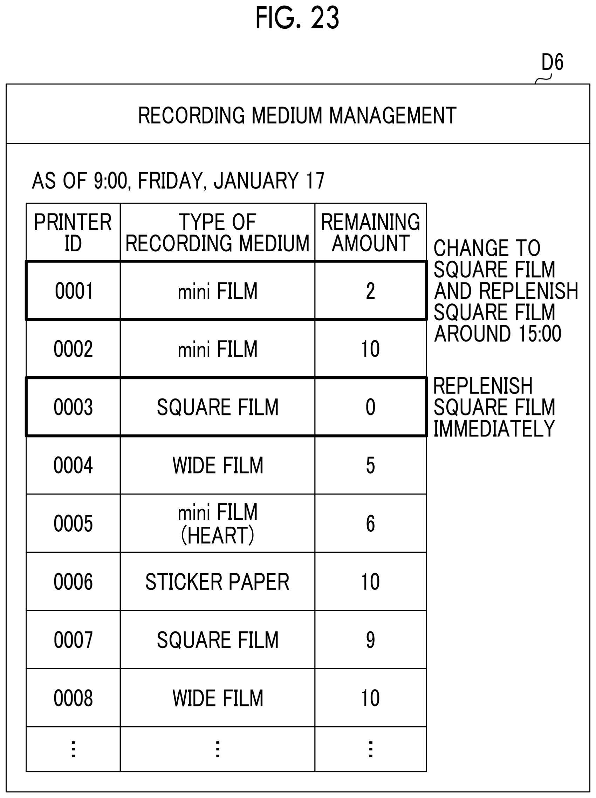

The output unit 78 outputs the matters decided in the recording medium management. FIG. 23 is an example of a screen D6 for displaying the matters decided in the recording medium management, which is displayed on the touch panel 30 by the display controller 77. The screen D6 includes the type of the recording medium accommodated in the printing mechanism and the replenishment timing as examples of the decision matters.

In addition, the output unit 78 may notify the matters decided in the recording medium management to a plurality of predetermined contact points in descending order of predetermined priority. For example, a smartphone, a tablet terminal, a wearable terminal, a personal computer, and the like owned by the administrator of the device 10 can be applied as the contact. The priority can be arbitrarily determined, for example, as a distance from the device 10 (in order of proximity), a skill level of each contact (in descending order or ascending order), and the number of times of responsibility for each contact (in descending order or ascending order).

For example, the output unit 78 may acquire the positional information of each of the plurality of contacts and may notify the closest contact from the device 10 of the decision matters based on the positional information. In addition, for example, the output unit 78 may receive a response from the notified contact and may notify the second closest contact from the device 10 of the decision matters in a case in which there is no response. With these functions, the recording medium can be quickly replenished.

The display controller 77 may recommend at least one type of the recording medium to the user 18 based on the demographic information and the remaining amount of the recording medium in the printing mechanism. For example, the display controller 77 may set the type of the recording medium displayed as "recommended" on the screen D2 of FIG. 8 to the recording medium of which the number of sheets is smaller than a predetermined threshold value (for example, 0 to 2 sheets) and is estimated to be preferred by the user 18 based on the demographic information of the user 18.

Further, the prediction unit 83 may predict the type of the recording medium to be selected, based on the demographic information of the user 18. In a case in which the remaining amount of the predicted type of the recording medium is smaller than a predetermined threshold value (for example, 0 to 2 sheets), the display controller 77 may recommend another type of the recording medium. For example, the display controller 77 may set the type of the recording medium displayed as "recommended" on the screen D2 of FIG. 8 to the recording medium in which the number of sheets is equal to or larger than a predetermined threshold value (for example, three or more sheets) and is estimated to be preferred by the user 18 based on the demographic information of the user 18.

Further, the acquisition unit 70 may acquire the identification information of the user 18. In such a case, the management unit 85 may execute the recording medium management based on the history information including a combination of the demographic information of the user 18, the identification information, and the selection result of the recording medium. For example, in a case in which the usage pattern of each user 18 is analyzed based on the identification information, a tendency such as the type of the recording medium preferred by the specific user 18 and a time slot with a high frequency of use can be analyzed. Accordingly, it is possible to contribute to improving the accuracy of the recording medium management.

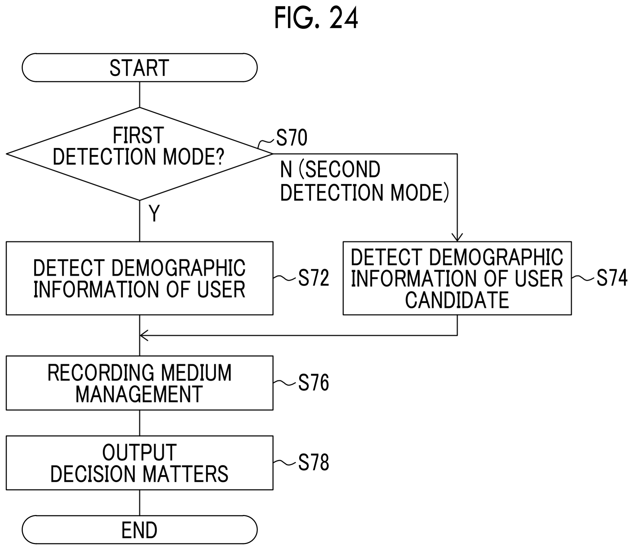

Next, an operation of the device 10 according to the present embodiment will be described with reference to FIG. 24. In the device 10, the CPU 41 executes a service providing process illustrated in FIG. 24 by executing the service providing program 43. The present process is executed, for example, in a case in which the user gives an instruction to start the execution.

In step S70, the detection unit 81 determines whether the mode is the first detection mode or the second detection mode. In a case in which the mode is the first detection mode, the process proceeds to step S72, and the detection unit 81 acquires the demographic information of the user 18. In a case in which the mode is the second detection mode, the process proceeds to step S74, and the detection unit 81 acquires the demographic information of the user candidate.

In step S76, the management unit 85 performs the recording medium management based on the demographic information. The output unit 78 outputs the matters decided in the recording medium management, and ends the present process.

As described above, the device 10 according to the present embodiment is a service providing device that provides services including a service for printing an image on at least one type of the plurality of types of recording media selected from among the plurality of types of recording media, the device 10 comprising: a printing mechanism that can accommodate the plurality of types of recording media and selectively prints on the plurality of types of recording media in accordance with the selection; and a processor. The processor performs recording medium management including management of at least one of the distribution or the number of the plurality of types of recording media accommodated in the printing mechanism, based on the demographic information.

That is, with the device 10 according to the present embodiment, it is possible to achieve enhancement in operational efficiency of the device 10. Specifically, since the recording medium can be optimized based on the demographic information, it is possible to reduce the time and effort required for the replenishment of the recording medium or to avoid the opportunity loss due to the stockout.

In each of the above embodiments, the form has been described in which the device 10 comprises the plurality of printers 50 that can perform the printing on one type of the recording medium, but the present disclosure is not limited to this. For example, a form may be adopted in which the device 10 comprises a supply mechanism that selectively supplies the plurality of types of recording media to the printer 50, so that one printer 50 can perform the printing on two or more types of recording media.

In each of the above embodiments, the form has been described in which the second housing 12 is disposed above the first housing 11 in the connected state, but the present disclosure is not limited to this. For example, a form may be adopted in which the second housings 12 are disposed on (connected to) the left and right or front and rear of the first housing 11.

In each of the above embodiments, the form has been described in which the device 10 comprises one first housing 11 and one second housing 12, but the present disclosure is not limited to this. The device 10 may comprise either or both of a plurality of the first housings 11 and a plurality of the second housings 12. For example, a form may be adopted in which the device 10 comprises a plurality of first housings 11 and a plurality of second housings 12. In addition, for example, a form may be adopted in which the device 10 comprises a plurality of first housings 11 and one second housing 12.

In each of the above embodiments, the form has been described in which the second housing 12 comprises the camera 31 and the like, but the present disclosure is not limited to this. For example, the first housing 11 may comprise the touch panel 30, the camera 31, the microphone 32, the acoustic device 33, the projection device 35, and the like in addition to or instead of the second housing 12.

In each of the above embodiments, each processing is executed by any computer. Further, any computer may execute these processes by a processor as hardware, a program as software, or a combination thereof. In such a case, the processor is configured to execute various types of processing in the present embodiment in cooperation with the program, and can function as each unit or each means in the present embodiment. The execution order of the processing by the processor is not limited to the above-described order and may be changed as appropriate. Any computer may be a general-purpose computer, a computer for a specific use, a workstation, or another system that can execute each processing.

The processor may be configured by one or more hardware components, and the types of hardware components are not limited. The processor may be configured by, for example, a central processing unit (CPU), a micro processing unit (MPU), a programmable logic device such as a field programmable gate array (FPGA), a dedicated circuit for executing specific processing, such as an application specific integrated circuit (ASIC), or hardware such as a graphics processing unit (GPU) or a neural processing unit (NPU). Further, the type of hardware component may be a combination of different types of hardware components. In a case in which the plurality of types of hardware components are configured to execute one or a plurality of processes of a certain processor, the plurality of types of hardware components may be present in devices physically disconnected or may be present in the same device. Furthermore, in any of the embodiments, the order of each process performed by the processor is not limited to the above-described order, and may be changed as appropriate. The hardware is configured by an electric circuit (circuitry) in which circuit elements, such as semiconductor elements, are combined.

Further, the program may be software such as firmware or microcode. Additionally, the program may be, for example, a program module group, and each function thereof may be executed by the processor configured to execute the corresponding function. The program may be program codes or a plurality of code segments stored in one or more non-transitory computer-readable media (for example, a storage medium and other storages). The program may be distributed and stored across a plurality of non-transitory computer-readable media existing in devices physically disconnected. The program codes or the code segments may represent any combination of procedures, functions, subprograms, routines, subroutines, modules, software packages, classes, or commands, data structures, or program statements. The program codes or the code segments may be connected to another code segment or a hardware circuit by transmitting and receiving information, data, an argument, a parameter, or a content of a memory.

In addition, in the above embodiments, the aspect has been described in which the service providing program 43 is stored (installed) in the storage unit 42 in advance, but the present disclosure is not limited to this. The service providing program 43 may be provided in a form being recorded in a recording medium such as a compact disc read-only memory (CD-ROM), a digital versatile disc read-only memory (DVD-ROM), and a Universal Serial Bus (USB) memory. Further, the service providing program 43 may be provided in a form of being downloaded from the external device via a network.

The technology of the present disclosure extends to any program products. The program products include products in any aspect for providing the programs. For example, the program product includes a program provided through a network such as the Internet, and a non-transitory computer-readable recording media such as a CD-ROM, a DVD-ROM, and a USB memory in which the program is stored.

In the technology of the present disclosure, the above embodiments and modification examples can be combined as appropriate. The above-described contents and the above-illustrated contents are detailed descriptions of portions related to the technology of the present disclosure and are merely examples of the technology of the present disclosure. For example, the description of the configuration, the function, the operation, and the effect above are the description of examples of the configuration, the function, the operation, and the effect of the parts according to the technology of the present disclosure. Accordingly, it goes without saying that unnecessary parts may be deleted, new elements may be added, or replacements may be made with respect to the above-described contents and the above-illustrated contents within a range that does not deviate from the gist of the technology of the present disclosure.

The following supplementary notes are disclosed with regard to the above embodiments.

### Supplementary Note 1

A service providing device that provides services including a service for printing an image on a recording medium, the service providing device comprising: a plurality of printers each having an independent accommodating mechanism for the recording medium; and a processor that selects at least one printer such that a condition having relatively high priority among a plurality of predetermined conditions for selecting the printers is satisfied.

### Supplementary Note 2

The service providing device according to supplementary note 1, in which the priority is changeable.

### Supplementary Note 3

The service providing device according to supplementary note 2, in which the processor receives a change in the priority.

### Supplementary Note 4

The service providing device according to any one of supplementary notes 1 to 3, in which the plurality of printers are configured to print the image on different types of the recording media, and the processor acquires designation information on designation of the type of the recording medium, and selects the printer based on the designation information.

### Supplementary Note 5

The service providing device according to any one of supplementary notes 1 to 4, in which the processor selects the printer based on information on a replenishment timing of a replenishment member for the printer.

### Supplementary Note 6

The service providing device according to any one of supplementary notes 1 to 5, in which the processor selects two or more printers in a case of performing the printing on a plurality of the recording media, and performs control such that the printing is performed by the two or more printers.

### Supplementary Note 7

The service providing device according to supplementary note 6, in which the plurality of recording media are of the same type.

### Supplementary Note 8

The service providing device according to supplementary note 6 or 7, in which, in a case of performing the printing on the plurality of recording media, the processor performs control such that a first print mode, and a second print mode in which the number of the printers to be selected is smaller than the number of the printers to be selected in the first print mode are switchable.

### Supplementary Note 9

The service providing device according to any one of supplementary notes 6 to 8, in which, in a case of performing the printing on the plurality of recording media, the processor performs control such that a first print mode in which control is performed such that the printing is performed in parallel by a larger number of the printers, and a second print mode in which control is performed such that the printing is performed by a smaller number of the printers are switchable.

### Supplementary Note 10

The service providing device according to supplementary note 8 or 9, in which the processor receives designation of the first print mode or the second print mode.

### Supplementary Note 11

The service providing device according to supplementary note 8 or 9, in which the processor switches between the first print mode and the second print mode based on a time taken for the printing.

### Supplementary Note 12

The service providing device according to supplementary note 11, in which the processor sets the first print mode in a case in which a preparation period from when the printer is instructed to print the image to when the printer starts the printing is shorter than a printing period from when the printer starts the printing to when the printing is completed, and sets the second print mode in a case in which the preparation period is longer than the printing period.

### Supplementary Note 13

The service providing device according to any one of supplementary notes 1 to 12, in which the processor performs control of prompting taking-out of the recording medium after the printing from a discharge port for the recording medium in a case of performing the printing on a plurality of the recording media.

### Supplementary Note 14

The service providing device according to any one of supplementary notes 1 to 13, in which the processor acquires height information on a height of a user, and selects the printer based on the height information.

### Supplementary Note 15

The service providing device according to any one of supplementary notes 1 to 14, in which the processor selects the printer based on a distribution of the number of the recording media in each of the printers.

### Supplementary Note 16

The service providing device according to any one of supplementary notes 1 to 15, in which the processor detects a change in the number of the recording media in each of the printers, and performs control of prompting use of the recording medium for which the change is relatively small.

### Supplementary Note 17

The service providing device according to any one of supplementary notes 1 to 16, in which the processor detects a distribution of the number of the recording media in each of the printers, and performs control of prompting use of the recording medium of which the number is relatively large in a case in which there is the recording medium of which the number is smaller than a predetermined threshold value.

### Supplementary Note 18

The service providing device according to any one of supplementary notes 1 to 17, in which the plurality of printers are each assigned identification information, and the processor reads the identification information of a target printer that is the printer as a target for work, and determines whether or not the work is appropriate based on a state of the target printer.

### Supplementary Note 19

The service providing device according to supplementary note 18, in which the state of the target printer includes a state related to the number of the recording media accommodated in the target printer.

### Supplementary Note 20

The service providing device according to any one of supplementary notes 1 to 19, further comprising: a first housing including a first printer; and a second housing including a second printer and the processor, in which the first housing and the second housing are connectable and capable of providing the services in both a connected state and a separated state in which the first housing and the second housing are disconnected, and the processor selects at least one of the first printer or the second printer.

### Supplementary Note 21

The service providing device according to supplementary note 20, in which at least one of a condition in which the first housing includes a plurality of the first printers or a condition in which the second housing includes a plurality of the second printers is satisfied, and the processor selects either or both of one or the plurality of first printers and one or the plurality of second printers.

### Supplementary Note 22

The service providing device according to supplementary note 20 or 21, in which the processor changes the priority depending on whether the service providing device is in the connected state or the separated state.

### Supplementary Note 23

The service providing device according to any one of supplementary notes 1 to 19, in which the processor manages the plurality of printers by dividing the plurality of printers into groups, and selects the printers included in a selected group by selecting one of the groups based on information on a distribution of the number of the recording media for each group.

### Supplementary Note 24

A service providing method executed by a computer for providing services including a service for printing an image on a recording medium, the service providing method comprising: selecting at least one printer of a plurality of printers each having an independent accommodating mechanism for the recording medium such that a condition having relatively high priority among a plurality of predetermined conditions for selecting the printers is satisfied.

### Supplementary Note 25

A service providing program for providing services including a service for printing an image on a recording medium, the service providing program causing a computer to execute a process comprising: selecting at least one printer of a plurality of printers each having an independent accommodating mechanism for the recording medium such that a condition having relatively high priority among a plurality of predetermined conditions for selecting the printers is satisfied.

## Claims

1. A service providing device that provides services including a service for printing an image on a recording medium, the service providing device comprising:
a plurality of printers each having an independent accommodating mechanism for the recording medium; and
a processor configured to select at least one printer such that a condition having relatively high priority among a plurality of predetermined conditions for selecting the printers is satisfied.

2. The service providing device according to claim 1, wherein:
the priority is changeable, and
optionally, the processor is configured to receive a change in the priority.

3. The service providing device according to claim lor 2, wherein:
the plurality of printers are configured to print the image on different types of the recording media, and
the processor is configured to:
acquire designation information on designation of the type of the recording medium; and
select the printer based on the designation information.

4. The service providing device according to any one of claims 1 to 3, wherein the processor is configured to select the printer based on information on a replenishment timing of a replenishment member for the printer.

5. The service providing device according to any one of claims 1 to 4, wherein, in a case of performing the printing on a plurality of the recording media:
the processor is configured to select two or more printers and perform control such that the printing is performed by the two or more printers,
for example, the plurality of recording media are of the same type,
for example, the processor is configured to perform control such that a first print mode and a second print mode in which the number of the printers to be selected is smaller than the number of the printers to be selected in the first print mode are switchable,
for example, the processor is configured to perform control such that a first print mode in which control is performed such that the printing is performed in parallel by a larger number of the printers and a second print mode in which control is performed such that the printing is performed by a smaller number of the printers are switchable, and
optionally, the processor is configured to receive designation of the first print mode or the second print mode.

6. The service providing device according to claim 5, wherein:
the processor is configured to switch between the first print mode and the second print mode based on a time taken for the printing, and
for example, the processor is configured to set the first print mode in a case in which a preparation period from when the printer is instructed to print the image to when the printer starts the printing is shorter than a printing period from when the printer starts the printing to when the printing is completed and set the second print mode in a case in which the preparation period is longer than the printing period.

7. The service providing device according to any one of claims 1 to 6, wherein the processor is configured to perform control of prompting taking-out of the recording medium after the printing from a discharge port for the recording medium in a case of performing the printing on a plurality of the recording media.

8. The service providing device according to any one of claims 1 to 7, wherein the processor is configured to:
acquire height information on a height of a user; and
select the printer based on the height information.

9. The service providing device according to any one of claims 1 to 8, wherein:
the processor is configured to select the printer based on a distribution of the number of the recording media in each of the printers; or
the processor is configured to detect the distribution of the number of the recording media in each of the printers and perform control of prompting use of the recording medium of which the number is relatively large in a case in which there is the recording medium of which the number is smaller than a predetermined threshold value.

10. The service providing device according to any one of claims 1 to 9, wherein the processor is configured to:
detect a change in the number of the recording media in each of the printers; and
perform control of prompting use of the recording medium for which the change is relatively small.

11. The service providing device according to any one of claims 1 to 10, wherein:
the plurality of printers are each assigned identification information,
the processor is configured to:
read the identification information of a target printer that is the printer as a target for work; and
determine whether or not the work is appropriate based on a state of the target printer, and
for example, the state of the target printer includes a state related to the number of the recording media accommodated in the target printer.

12. The service providing device according to any one of claims 1 to 11, further comprising:
a first housing including a first printer; and
a second housing including a second printer and the processor, wherein:
the first housing and the second housing are connectable and capable of providing the services in both a connected state and a separated state in which the first housing and the second housing are disconnected,
the processor is configured to select at least one of the first printer or the second printer,
preferably, at least one of a condition in which the first housing includes a plurality of the first printers or a condition in which the second housing includes a plurality of the second printers is satisfied, and
optionally, the processor is configured to select either or both of one or the plurality of first printers and one or the plurality of second printers.

13. The service providing device according to any one of claims 1 to 12, wherein the processor is configured to:
manage the plurality of printers by dividing the plurality of printers into groups; and
select the printers included in a selected group by selecting one of the groups based on information on a distribution of the number of the recording media for each group.

14. A service providing method executed by a computer for providing services including a service for printing an image on a recording medium, the service providing method comprising:
selecting at least one printer of a plurality of printers each having an independent accommodating mechanism for the recording medium such that a condition having relatively high priority among a plurality of predetermined conditions for selecting the printers is satisfied.

15. A computer-readable storage medium storing a service providing program for providing services including a service for printing an image on a recording medium, the service providing program causing a computer to execute a process comprising:
selecting at least one printer of a plurality of printers each having an independent accommodating mechanism for the recording medium such that a condition having relatively high priority among a plurality of predetermined conditions for selecting the printers is satisfied.
